(19) **Europäisches Patentamt / European Patent Office / Office européen des brevets**

(11) **EP 4 503 827 A1**

(12) **EUROPEAN PATENT APPLICATION**
published in accordance with Art. 153(4) EPC

(43) Date of publication:
**05.02.2025 Bulletin 2025/06**

(21) Application number: **22934249.8**

(22) Date of filing: **31.03.2022**

(51) International Patent Classification (IPC):
**H04W 74/00** (2009.01)

(52) Cooperative Patent Classification (CPC):
**H04W 74/00**

(86) International application number:
**PCT/CN2022/084591**

(87) International publication number:
**WO 2023/184412 (05.10.2023 Gazette 2023/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventors:
• **HU, Ziquan**
  **Beijing 100085 (CN)**
• **LI, Yanhua**
  **Beijing 100085 (CN)**

(74) Representative: **Dehns Germany Partnerschaft mbB**
**Theresienstraße 6-8**
**80333 München (DE)**

(54) **MEASURING METHOD AND APPARATUS, DEVICE, AND STORAGE MEDIUM**

(57) A measuring method and apparatus, a device, and a storage medium. The method is executed by a user equipment, and comprises: sending indication information to a network device, the indication information indicating a relaxation measurement characteristic supported by the user equipment, and the relaxation measurement characteristic comprising a first relaxation measurement characteristic and a second relaxation measurement characteristic (101); receiving configuration information from the network device, and determining, on the basis of the configuration information, whether the user equipment satisfies a relaxation measurement criterion corresponding to the supported relaxation measurement characteristic (102); and executing corresponding relaxation measurement on the basis of the relaxation measurement criterion satisfied by the user equipment (103). By using the method, more optimized RLMBFD relaxation measurement can be achieved.

```
┌─────────────────────────────────────────────────────────────┐
│ sending indication information to a network device, the      │
│ indication information indicating a relaxation measurement    │
│ feature supported by the user equipment, and the relaxation   │
│ measurement feature including a first relaxation measurement  │
│ feature and a second relaxation measurement feature           │──101
└─────────────────────────────────────────────────────────────┘
                            │
                            ▼
┌─────────────────────────────────────────────────────────────┐
│ receiving configuration information from the network device,  │
│ and determine, according to the configuration information,    │
│ whether the user equipment satisfies a relaxation measurement │
│ criterion corresponding to the supported relaxation           │
│ measurement feature                                           │──102
└─────────────────────────────────────────────────────────────┘
                            │
                            ▼
┌─────────────────────────────────────────────────────────────┐
│ performing corresponding relaxation measurement according to  │
│ the relaxation measurement criterion satisfied by the user    │
│ equipment                                                     │──103
└─────────────────────────────────────────────────────────────┘
```

FIG. 1

**Description**

**FIELD**

The present invention relates to the technical field of wireless communication, and more particularly relates to a measuring method and apparatus, a device, and a storage medium.

**BACKGROUND**

The 3rd Generation Partnership Project (3GPP) Rel-17 has introduced a reduced capability (Redcap) terminal type, and this terminal type has characteristics of low cost, small size, and the like. A Redcap terminal user differs from an ordinary enhanced mobile broadband (eMBB) terminal user in that the Redcap terminal user is stationary in some scenarios and therefore has a much lower mobility than the eMBB terminal user. It is currently discussed that by configuring a stationary criterion for a Redcap terminal in a connected state, a terminal satisfying the stationary criterion can perform relaxation radio resource management (RRM) measurement.

In 3GPP, a relaxation measurement mechanism for radio link monitoring (RLM) and beam failure detection (BFD) is introduced in R17. RLM and/or BFD relaxation measurement will be performed for users satisfying a relaxation criterion (a low mobility criterion and/or a good serving cell signal quality criterion).

Therefore, the RLMBFD relaxation measurement is introduced in R17, and the R17 Redcap terminal supports the RRM relaxation measurement in the connected state. Furthermore, the determination of the mobility of the terminal is included in determination criteria of the two types of relaxation measurements, and the used determination mechanism and the determination object both involve a layer 3 reference signal received power (L3 RSRP) of a primary serving cell.

**SUMMARY**

In view of the above, the present invention provides a measuring method and apparatus, a device, and a storage medium.

According to a first aspect of an embodiment of the present invention, provided is a measuring method, performed by a user equipment, including: sending indication information to a network device, the indication information indicating a relaxation measurement feature supported by the user equipment, and the relaxation measurement feature including a first relaxation measurement feature and a second relaxation measurement feature; receiving configuration information from the network device, and determining, according to the configuration information, whether the user equipment satisfies a relaxation measurement criterion corresponding to the supported relaxation measurement feature; and performing corresponding relaxation measurement according to the relaxation measurement criterion satisfied by the user equipment.

In an embodiment, receiving the configuration information from the network device, and determining, according to the configuration information, whether the user equipment satisfies the relaxation measurement criterion corresponding to the supported relaxation measurement feature, includes: receiving first configuration information from the network device, the first configuration information including a first parameter set; and determining, according to the first parameter set, whether the user equipment satisfies a first relaxation measurement criterion corresponding to the first relaxation measurement feature.

In an embodiment, receiving the configuration information from the network device, and determining, according to the configuration information, whether the user equipment satisfies the relaxation measurement criterion corresponding to the supported relaxation measurement feature, further includes: receiving second configuration information from the network device in response to the network device determining that the user equipment satisfies the first relaxation measurement criterion, the second configuration information including a second parameter set; and determining, according to the second parameter set, whether the user equipment satisfies a second relaxation measurement criterion corresponding to the second relaxation measurement feature.

In an embodiment, receiving the configuration information from the network device, and determining, according to the configuration information, whether the user equipment satisfies the relaxation measurement criterion corresponding to the supported relaxation measurement feature, further includes: receiving third configuration information from the network device in response to the network device determining that the user equipment does not satisfy the first relaxation measurement criterion, the third configuration information including a second parameter set and a third parameter set; and determining, according to the second parameter set, whether the user equipment satisfies a second relaxation measurement criterion corresponding to the second relaxation measurement feature, and determining, according to the third parameter set, whether the user equipment satisfies a third relaxation measurement criterion corresponding to the second relaxation measurement feature.

In an embodiment, receiving the configuration information from the network device, and determining, according to the configuration information, whether the user equipment satisfies the relaxation measurement criterion corresponding to the supported relaxation measurement feature, further includes: receiving second configuration information from the network device in response to the network device determining that the user equipment does not satisfy the first relaxation measurement criterion, the second configuration information including a second parameter set; and determining, according to the second parameter set, whether the user equipment satisfies a second relaxation measurement criterion corresponding to the second relaxation measurement feature.

In an embodiment, receiving the configuration information from the network device, and determining, according to the configuration information, whether the user equipment satisfies the relaxation measurement criterion corresponding to the supported relaxation measurement feature, includes: receiving fourth configuration information from the network device, the fourth configuration information including a first parameter set and a second parameter set; and determining, according to the first parameter set, whether the user equipment satisfies a first relaxation measurement criterion corresponding to the first relaxation measurement feature, and determining, according to the second parameter set, whether the user equipment satisfies a second relaxation measurement criterion corresponding to the second relaxation measurement feature.

In an embodiment, receiving the configuration information from the network device, and determining, according to the configuration information, whether the user equipment satisfies the relaxation measurement criterion corresponding to the supported relaxation measurement feature, includes: receiving fifth configuration information from the network device, the fifth configuration information including a first parameter set, a second parameter set and a third parameter set; and determining, according to the first parameter set, whether the user equipment satisfies a first relaxation measurement criterion corresponding to the first relaxation measurement feature, and determining, according to the second parameter set, whether the user equipment satisfies a second relaxation measurement criterion corresponding to the second relaxation measurement feature; where the third parameter set is used for determining whether the user equipment satisfies a third relaxation measurement criterion corresponding to the second relaxation measurement feature.

In an embodiment, receiving the configuration information from the network device, and determining, according to the configuration information, whether the user equipment satisfies the relaxation measurement criterion corresponding to the supported relaxation measurement feature, includes: receiving fifth configuration information from the network device, the fifth configuration information including a first parameter set, a second parameter set and a third parameter set; and determining, according to the second parameter set, whether the user equipment satisfies a second relaxation measurement criterion corresponding to the second relaxation measurement feature, and determining, according to the third parameter set, whether the user equipment satisfies a third relaxation measurement criterion corresponding to the second relaxation measurement feature; where the first parameter set is used for determining whether the user equipment satisfies a first relaxation measurement criterion corresponding to the first relaxation measurement feature.

In an embodiment, performing the corresponding relaxation measurement according to the relaxation measurement criterion satisfied by the user equipment, includes: determining an expansion coefficient for second relaxation measurement to be a first expansion coefficient in response to the user equipment satisfying a second relaxation measurement criterion and a third relaxation measurement criterion; and performing the second relaxation measurement according to the first expansion coefficient; where the second relaxation measurement criterion and the third relaxation measurement criterion both correspond to the second relaxation measurement feature.

In an embodiment, performing the corresponding relaxation measurement according to the relaxation measurement criterion satisfied by the user equipment, includes: determining an expansion coefficient for second relaxation measurement to be a second expansion coefficient in response to the user equipment satisfying a first relaxation measurement criterion and a second relaxation measurement criterion; and performing the second relaxation measurement according to the second expansion coefficient; where the first relaxation measurement criterion corresponds to the first relaxation measurement feature, and the second relaxation measurement criterion corresponds to the second relaxation measurement feature.

In an embodiment, the first relaxation measurement feature is a radio resource management (RRM) relaxation measurement feature, and the second relaxation measurement feature is a radio link monitoring (RLM)/beam failure detection (BFD) relaxation measurement feature.

In an embodiment, the second relaxation measurement criterion is a good cell signal quality criterion, and the third relaxation measurement criterion is a low mobility criterion.

In an embodiment, the first relaxation measurement criterion is a stationary criterion, and the second relaxation measurement criterion is a good cell signal quality criterion.

According to a second aspect of an embodiment of the present invention, provided is a measuring method performed by a network device, including: receiving indication information from a user equipment, the indication information indicating a relaxation measurement feature supported by the user equipment, and the relaxation measurement feature including a first relaxation measurement feature and a second relaxation measurement feature; and sending configuration information to the user equipment, the configuration information being used for the user equipment to determine whether a relaxation measurement criterion corresponding to the supported relaxation measurement feature is satisfied.

In an embodiment, sending the configuration information to the user equipment includes: sending first configuration information to the user equipment, the first configuration information including a first parameter set, and the first parameter set being used for determining whether the user equipment satisfies a first relaxation measurement criterion corresponding to the first relaxation measurement feature.

In an embodiment, sending the configuration information to the user equipment further includes: sending second configuration information to the user equipment in response to the user equipment satisfying the first relaxation measurement criterion, the second configuration information including a second parameter set, and the second parameter set being used for determining whether the user equipment satisfies a second relaxation measurement criterion corresponding to the second relaxation measurement feature.

In an embodiment, sending the configuration information to the user equipment further includes: sending third configuration information to the user equipment in response to the user equipment not satisfying the first relaxation measurement criterion, the third configuration information including a second parameter set and a third parameter set, the second parameter set being used for determining whether the user equipment satisfies a second relaxation measurement criterion corresponding to the second relaxation measurement feature, and the third parameter set being used for determining whether the user equipment satisfies a third relaxation measurement criterion corresponding to the second relaxation measurement feature.

In an embodiment, sending the configuration information to the user equipment further includes: sending second configuration information to the user equipment in response to the user equipment not satisfying the first relaxation measurement criterion, the second configuration information including a second parameter set, and the second parameter set being used for determining whether the user equipment satisfies a second relaxation measurement criterion corresponding to the second relaxation measurement feature.

In an embodiment, sending the configuration information to the user equipment includes: sending fourth configuration information to the user equipment, the fourth configuration information including: a first parameter set and a second parameter set; where the first parameter set is used for determining whether the user equipment satisfies a first relaxation measurement criterion corresponding to the first relaxation measurement feature, and the second parameter set is used for determining whether the user equipment satisfies a second relaxation measurement criterion corresponding to the second relaxation measurement feature.

In an embodiment, sending the configuration information to the user equipment includes: sending fifth configuration information to the user equipment, the fifth configuration information including: a first parameter set, a second parameter set and a third parameter set; where the first parameter set is used for determining whether the user equipment satisfies a first relaxation measurement criterion corresponding to the first relaxation measurement feature, the second parameter set is used for determining whether the user equipment satisfies a second relaxation measurement criterion corresponding to the second relaxation measurement feature, and the third parameter set is used for determining whether the user equipment satisfies a third relaxation measurement criterion corresponding to the second relaxation measurement feature.

In an embodiment, the first relaxation measurement feature is a radio resource management (RRM) relaxation measurement feature, and the second relaxation measurement feature is a radio link monitoring (RLM)/beam failure detection (BFD) relaxation measurement feature.

In an embodiment, the first relaxation measurement criterion is a stationary criterion, the second relaxation measurement criterion is a good cell signal quality criterion, and the third relaxation measurement criterion is a low mobility criterion.

According to a third aspect of an embodiment of the present invention, provided is a measuring apparatus disposed on a user equipment, including: a transceiving module configured to send indication information to a network device, the indication information indicating a relaxation measurement feature supported by the user equipment, and the relaxation measurement feature including a first relaxation measurement feature and a second relaxation measurement feature; and receive configuration information from the network device, and determine, according to the configuration information, whether the user equipment satisfies a relaxation measurement criterion corresponding to the supported relaxation measurement feature; and a processing module configured to performing corresponding relaxation measurement according to the relaxation measurement criterion satisfied by the user equipment.

According to a fourth aspect of an embodiment of the present invention, provided is a measuring apparatus disposed on a network device, including: a transceiving module configured to receive indication information from a user equipment, the indication information indicating a relaxation measurement feature supported by the user equipment, and the relaxation measurement feature including a first relaxation measurement feature and a second relaxation measurement feature; and sending configuration information to the user equipment, the configuration information being used for determining whether the user equipment satisfies a relaxation measurement criterion corresponding to the supported relaxation measurement feature.

According to a fifth aspect of an embodiment of the present invention, provided is a mobile terminal, including: a processor; and a memory for storing processor-executable instructions; where the processor is configured to perform the executable instructions in the memory to implement steps of the above measuring method.

According to a sixth aspect of an embodiment of the present invention, provided is a network device, including: a processor; and a memory for storing processor-executable instructions; where the processor is configured to perform the executable instructions in the memory to implement steps of the above measuring method.

According to a seventh aspect of an embodiment of the present invention, provided is a non-transitory computer-readable storage medium having stored therein executable instructions that, when executed by a processor, cause steps of the above measuring method to be implemented.

The technical solutions provided by the embodiments of the present invention can include the following beneficial effects. When the user equipment supports both the RRM relaxation measurement feature and the RLMBFD relaxation measurement feature, the user equipment determines the relaxation measurement criterion satisfied by the user equipment according to the configuration information sent by the network device, so as to determine a relaxation degree of RLMBFD measurement to achieve more optimized RLMBFD relaxation measurement.

It should be understood that the foregoing general description and the following detailed description are explanatory only, and are not intended to limit the present invention.

## BRIEF DESCRIPTION OF THE DRAWINGS

The accompanying drawings illustrated herein are used for providing a further understanding of embodiments of the present invention and constitute a part of the present invention. The example embodiments of the present invention and the description thereof are used for interpreting the embodiments of the present invention and do not constitute undue limitation on the embodiments of the present invention. In the accompanying drawings, the accompanying drawings herein are incorporated into this specification and constitute a part of this specification, show the embodiments which conform to the embodiments of the present invention, and are used for interpreting the principle of the embodiments of the present invention together with the specification.

FIG. 1 is a flowchart of a measuring method according to an example embodiment;
FIG. 2 is a flowchart of a measuring method according to an example embodiment;
FIG. 3 is a flowchart of a measuring method according to an example embodiment;
FIG. 4 is a flowchart of a measuring method according to an example embodiment;
FIG. 5 is a flowchart of a measuring method according to an example embodiment;
FIG. 6 is a flowchart of a measuring method according to an example embodiment;
FIG. 7 is a flowchart of a measuring method according to an example embodiment;
FIG. 8 is a flowchart of a measuring method according to an example embodiment;
FIG. 9 is a flowchart of a measuring method according to an example embodiment;
FIG. 10 is a flowchart of a measuring method according to an example embodiment;
FIG. 11 is a flowchart of a measuring method according to an example embodiment;
FIG. 12 is a flowchart of a measuring method according to an example embodiment;
FIG. 13 is a flowchart of a measuring method according to an example embodiment;
FIG. 14 is a flowchart of a measuring method according to an example embodiment;
FIG. 15 is a flowchart of a measuring method according to an example embodiment;
FIG. 16 is a block diagram of a measuring apparatus according to an example embodiment;
FIG. 17 is a block diagram of a measuring apparatus according to an example embodiment;
FIG. 18 is a structure diagram of a measuring device according to an example embodiment; and
FIG. 19 is a structure diagram of a measuring device according to an example embodiment.

## DETAILED DESCRIPTION

Embodiments of the present invention will now be further illustrated in conjunction with accompanying drawings and specific implementations.

Example embodiments will be illustrated in detail herein, and the examples thereof are indicated in the accompanying drawings. When the following description refers to the accompanying drawings, same numbers in different accompanying drawings indicate same or similar elements, unless otherwise indicated. The implementations described in the following example embodiments do not represent all implementations consistent with the embodiments of the present invention. They are merely examples of apparatuses and methods consistent with some aspects of the present invention as detailed in the appended claims.

It should be noted that a plurality of steps can be included in one embodiment of the present invention; these steps are numbered for convenience of description; however, these numbers do not limit an execution time slot and an execution order for the steps; and these steps can be embodied in any order, which is not limited in the embodiments of the present invention.

In the description of the present invention, the words "first", "second", "third", and the like are only used for the purpose of distinguishing the description, are not to be construed as indicating or implying relative importance, and are also not to be construed as indicating or implying the order. Wording "a plurality of" refers to two or more.

Wording "and/or", describing an associated relationship of associated objects, indicates that three relationships can exist, for example, A and/or B, can indicate that there are three cases of A alone, A and B together, and B alone.

3 GPP Rel-17 has introduced a Redcap terminal type. It is currently discussed that by configuring a stationary criterion for a Redcap UE in a connected state, the UEs satisfying the stationary criterion can perform relaxation RRM measurement.

The content of the stationary criterion is as follows: within a certain time ($T_{SearchDeltaP-StationaryConnected}$), if a difference value between a reference signal received power (RSRP) and a current RSRP of a terminal is less than a certain preset threshold value ($S_{SearchDeltaP-Connected}$), it is indicated that a change amplitude of a signal is not large, and then the current terminal can be considered to be in a stationary state. It should be noted that the determination only needs to be considered when the signal falls, and a specific determination condition is as follows:

$$(\text{Srxlev}_{\text{RefStationaryConnected}} - \text{Srxlev}) < S_{\text{SearchDeltaP-Connected}},$$

where Srxlev is a Srxlev value of a current primary serving cell, with a unit of dB; and
$\text{Srxlev}_{\text{RefStationaryConnected}}$ is a Srxlev reference value of the primary serving cell, with a unit of dB.

A relaxation method for RRM measurement is configured by a network device through a radio resource control (RRC) signaling.

In 3GPP, a relaxation mechanism for RLM and BFD is introduced into R17. For terminals satisfying a good serving cell signal quality criterion (compulsory configuration) and a low mobility criterion (optional configuration), RLM and/or BFD relaxation measurement will be performed.

The content of the low mobility criterion is as follows: within a certain time ($T_{SearchDeltaP-Connected}$), if a difference value between a reference signal received power (RSRP) and a current RSRP of a UE is less than a certain preset threshold value ($S_{SearchDeltaP-Connected}$), it is indicated that a change amplitude of a signal is not large, and the current UE can be considered to be in a low mobility state. It should be noted that the determination only needs to be considered when the signal falls, and a specific determination condition is as follows:

$$(\text{SS-RSRP}_{\text{Ref}} - \text{SS-RSRP}) < S_{\text{SearchDeltaP-Connected}},$$

where:

SS-RSRP = L3RSRP value of current SpCell (primary cell + primary secondary cell) according to SSB measurement, with a unit of dB; and
$\text{SS-RSRP}_{\text{Ref}}$ = L3RSRP reference value of current SpCell according to SSB measurement, with a unit of dB.

The content of the good serving cell signal quality criterion is as follows: when a terminal evaluates that the quality of a reference signal is higher than a threshold value, it is considered that the good serving cell signal quality criterion is satisfied, and specific determination conditions are as follows: after receiving configuration for the good cell signal quality criterion of RLM, the terminal evaluates that the signal quality of RLM-RS is higher than a threshold value Qin + XdB, where Qin is an evaluation value defined by a protocol; and X is configured by *goodServingCellEvaluatzonRLM;* and after receiving configuration for the good cell signal quality criterion of BFD, the terminal evaluates that the signal quality of RLM-RS is higher than a threshold value Qin + XdB, where Qin is an evaluation value defined by a protocol; and X is configured by *goodServingCellEvaluationBFD.*

A relaxation method for RLMBFD measurement is to use an expansion coefficient for expanding a measurement interval of the terminal. The greater the expansion coefficient is, the larger the measurement interval is, and the more relaxed the measurement is.

It should be noted that when determining whether to perform RLM/BFD measurement relaxation, it should determine a signal quality of a serving cell according to the good serving cell signal quality criterion, and the mobility of the terminal may be determined in different ways according to whether a network issues a parameter of the low mobility criterion. If the network issues the parameter of the low mobility criterion, the terminal needs to determine the mobility according to the low mobility criterion; otherwise, the terminal does not need to determine the mobility thereof according to the low mobility criterion.

As the determination of the mobility of the terminal is contained in determination criteria of the two types of relaxation measurements, for the terminal supporting an RRM relaxation feature and an RLM/BFD relaxation feature, if the terminal further receives a parameter configured by a network device for determining the RRM relaxation measurement when performing RLMBFD relaxation measurement determination, how to perform RLM/BFD relaxation measurement by the terminal needs to be considered.

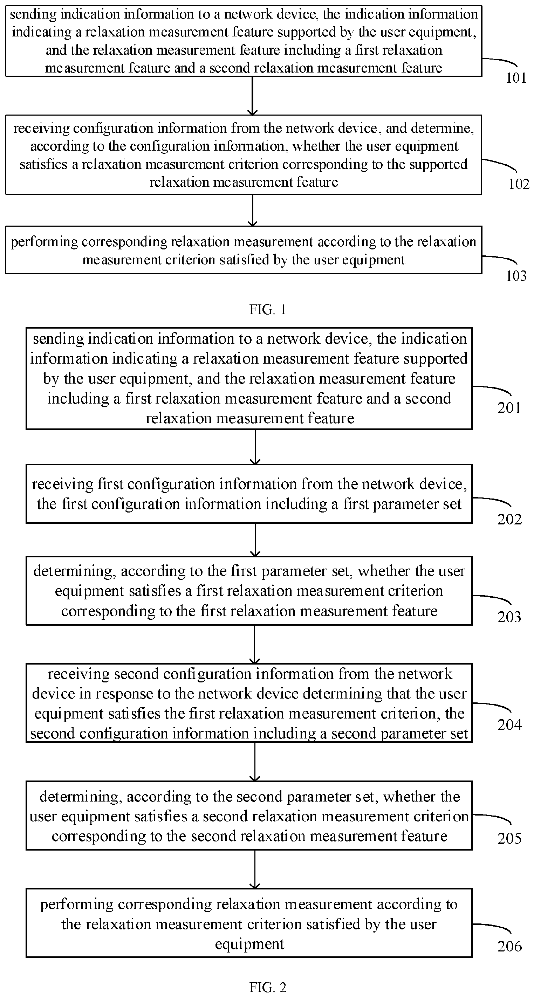

An embodiment of the present invention provides a measuring method performed by a user equipment. FIG. 1 is a flowchart of a measuring method according to an example embodiment, and as shown in FIG. 1, the method includes the following steps.

In block 101, indication information is sent to a network device, the indication information indicates a relaxation measurement feature supported by the user equipment, and the relaxation measurement feature includes a first relaxation measurement feature and a second relaxation measurement feature.

In block 102, configuration information is received from the network device, and it is determined, according to the configuration information, whether the user equipment satisfies a relaxation measurement criterion corresponding to the supported relaxation measurement feature.

In block 103, corresponding relaxation measurement is performed according to the relaxation measurement criterion satisfied by the user equipment.

In an embodiment, a user equipment sends indication information to a network device, for example, through an RRC message (such as DECapabilityInformation), and reports a relaxation measurement feature supported by the user equipment to the network device, the relaxation measurement feature including two types of relaxation measurement features: a first relaxation measurement feature and a second relaxation measurement feature. After receiving the relaxation measurement feature supported and reported by the user equipment, the network device sends configuration information to the user equipment, and the configuration information is used for the user equipment to determine whether the user equipment satisfies a relaxation measurement criterion corresponding to the supported relaxation measurement feature. The user equipment receives the configuration information and determines whether the user equipment satisfies the corresponding relaxation measurement criterion according to the configuration information. The user equipment then performs the corresponding measurement according to the relaxation measurement criterion satisfied by the user equipment.

For example, the first relaxation measurement feature is an RRM relaxation measurement feature, and the second relaxation measurement feature is an RLMBFD relaxation measurement feature. Namely, the user equipment supports the RRM relaxation measurement feature and the RLMBFD relaxation measurement feature. A first relaxation measurement criterion corresponding to the first relaxation measurement feature is a stationary criterion, and a second relaxation measurement criterion and a third relaxation measurement criterion corresponding to the second relaxation measurement feature are a good cell signal quality criterion and a low mobility criterion, respectively. The user equipment determines, according to the configuration information sent by the network device, the relaxation measurement criterion satisfied by the user equipment, and performs RLMBFD relaxation measurement according to the relaxation measurement criterion satisfied by the user equipment.

First relaxation measurement corresponds to the first relaxation measurement criterion, namely the stationary criterion. Second relaxation measurement corresponds to two types of relaxation measurement criteria, including the second relaxation measurement criterion and the third relaxation measurement criterion, the second relaxation measurement criterion being the good serving cell signal quality criterion, and the third relaxation measurement criterion being the low mobility criterion.

For convenience of explanation, the implementations described below are all exemplified with the first relaxation measurement feature being the RRM relaxation measurement feature and the second relaxation measurement feature being the RLMBFD relaxation measurement feature. As previously described, the relaxation measurement criterion corresponding to the RRM relaxation measurement feature is the stationary criterion, and the relaxation measurement criterion corresponding to the RLMBFD relaxation measurement feature is the good serving cell signal quality criterion and the low mobility criterion.

In the above implementation, taking the user equipment supporting both the RRM relaxation measurement feature and the RLMBFD relaxation measurement feature for example, the user equipment determines, according to the configuration information sent by the network device, the relaxation measurement criterion satisfied by the user equipment, so as to determine the relaxation degree of the RLM/BFD measurement, and achieve more optimized RLMBFD relaxation measurement.

An embodiment of the present invention provides a measuring method performed by a user equipment. The method includes: sending indication information to a network device, the indication information indicating a relaxation measurement feature supported by the user equipment, and the relaxation measurement feature including a first relaxation measurement feature and a second relaxation measurement feature; receiving configuration information from the network device, and determining, according to the configuration information, whether the user equipment satisfies a relaxation measurement criterion corresponding to the supported relaxation measurement feature; and performing corresponding relaxation measurement according to the relaxation measurement criterion satisfied by the user equipment.

Receiving the configuration information from the network device, and determining, according to the configuration information, whether the user equipment satisfies the relaxation measurement criterion corresponding to the supported relaxation measurement feature, includes: receiving first configuration information from the network device, the first configuration information including a first parameter set; and determining, according to the first parameter set, whether the user equipment satisfies a first relaxation measurement criterion corresponding to the first relaxation measurement feature.

In an embodiment, a user equipment sends indication information to a network device, for example, through an RRC message, and reports a relaxation measurement feature supported by the user equipment to the network device, the relaxation measurement feature including two types of relaxation measurement features: a first relaxation measurement feature and a second relaxation measurement feature. After receiving the relaxation measurement feature supported and reported by the user equipment, the network device sends configuration information to the user equipment, the configuration information including first configuration information, and the first configuration information including a first parameter set. The user equipment receives the first configuration information, and determines, according to the first parameter set, whether the user equipment satisfies a first relaxation measurement criterion corresponding to the first relaxation measurement feature. The user equipment then performs the corresponding relaxation measurement according to the relaxation measurement criterion satisfied by the user equipment.

In an embodiment, a user equipment sends indication information to a network device, for example, through an RRC message, and reports to the network device that the user equipment supports an RRM relaxation measurement feature and an RLMBFD relaxation measurement feature. After receiving the relaxation measurement features supported and reported by the user equipment, the network device sends configuration information to the user equipment, the configuration information including first configuration information, and the first configuration information including a determination parameter of a stationary criterion. The user equipment receives the first configuration information, and determines, according to the determination parameter of the stationary criterion, whether the user equipment satisfies the stationary criterion corresponding to the RRM relaxation measurement feature. The user equipment can also receive a determination parameter corresponding to the RLMBFD relaxation measurement feature and perform corresponding determination. Finally, the user equipment performs the RLMBFD relaxation measurement according to the relaxation measurement criterion satisfied by the user equipment.

In the above implementation, taking the user equipment supporting both the RRM relaxation measurement feature and the RLMBFD relaxation measurement feature for example, the network device firstly sends the determination parameter of the stationary criterion to the user equipment, and the user equipment firstly performs determination on the stationary criterion, and then performs determination on the relaxation measurement criterion corresponding to the RLMBFD relaxation measurement feature. As the determination on the stationary criterion is stricter than the determination on the low mobility criterion, on the premise that the user equipment satisfies the stationary criterion, the user equipment can perform a greater degree of relaxation when performing the RLMBFD relaxation measurement, so that more optimized RLMBFD relaxation measurement can be achieved.

An embodiment of the present invention provides a measuring method performed by a user equipment. FIG. 2 is a flowchart of a measuring method according to an example embodiment, and as shown in FIG. 2, the method includes the following steps.

In block 201, indication information is sent to a network device, the indication information indicates a relaxation measurement feature supported by the user equipment, and the relaxation measurement feature includes a first relaxation measurement feature and a second relaxation measurement feature.

In block 202, first configuration information is received from the network device, the first configuration information includes a first parameter set.

In block 203, it is determined, according to the first parameter set, whether the user equipment satisfies a first relaxation measurement criterion corresponding to the first relaxation measurement feature.

In block 204, second configuration information is received from the network device in response to the network device determining that the user equipment satisfies the first relaxation measurement criterion, where the second configuration information includes a second parameter set.

In block 205, it is determined, according to the second parameter set, whether the user equipment satisfies a second relaxation measurement criterion corresponding to the second relaxation measurement feature.

In block 206, corresponding relaxation measurement is performed according to the relaxation measurement criterion satisfied by the user equipment.

In an embodiment, a user equipment sends indication information to a network device, for example, through an RRC message, and reports to the network device that the user equipment supports an RRM relaxation measurement feature and an RLMBFD relaxation measurement feature. After receiving the relaxation measurement features supported and reported by the user equipment, the network device sends configuration information to the user equipment, the configuration information including first configuration information, and the first configuration information including a determination parameter of a stationary criterion. The user equipment receives the first configuration information, and determines, according to the determination parameter of the stationary criterion, whether the user equipment satisfies the stationary criterion corresponding to the RRM relaxation measurement feature. If the user equipment satisfies the stationary criterion, the user equipment reports to the network device that the user equipment is in a stationary state. After receiving the reporting information of the user equipment, the network device sends second configuration information to the user equipment, the second configuration information including a determination parameter of a good cell signal quality criterion. The user equipment receives the second configuration information, and determines, according to the determination parameter of the good cell signal quality criterion, whether the user equipment satisfies the good cell signal quality criterion corresponding to the RLMBFD relaxation measurement feature. Finally, the user equipment performs the RLMBFD relaxation measurement according to the relaxation measurement criterion satisfied by the user equipment.

In the above implementation, taking the user equipment supporting both the RRM relaxation measurement feature and the RLMBFD relaxation measurement feature for example, the network device firstly sends the determination parameter of the stationary criterion to the user equipment, the user equipment firstly performs determination on the stationary criterion, and when the user equipment satisfies the stationary criterion, the network device then sends the determination parameter of the good cell signal quality criterion to the user equipment, and the user equipment performs determination on the good cell signal quality criterion. As the determination on the stationary criterion is stricter than the determination on the low mobility criterion, on the premise that the user equipment satisfies the stationary criterion, the user equipment can perform a greater degree of relaxation when performing the RLMBFD relaxation measurement, so that more optimized RLM/BFD relaxation measurement can be achieved.

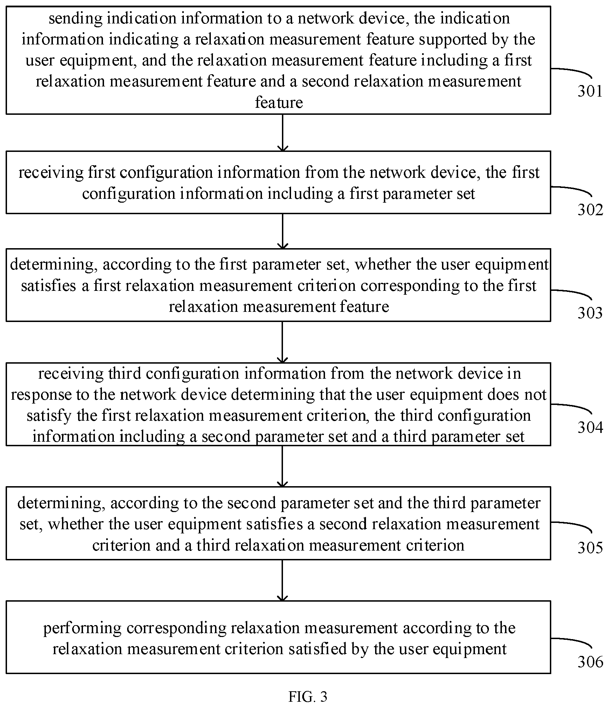

An embodiment of the present invention provides a measuring method performed by a user equipment. FIG. 3 is a flowchart of a measuring method according to an example embodiment, and as shown in FIG. 3, the method includes the following steps.

In block 301, indication information is sent to a network device, the indication information indicates a relaxation measurement feature supported by the user equipment, and the relaxation measurement feature includes a first relaxation measurement feature and a second relaxation measurement feature.

In block 302, first configuration information is received from the network device, the first configuration information includes a first parameter set.

In block 303, it is determined, according to the first parameter set, whether the user equipment satisfies a first relaxation measurement criterion corresponding to the first relaxation measurement feature.

In block 304, third configuration information is received from the network device in response to the network device determining that the user equipment does not satisfy the first relaxation measurement criterion, where the third configuration information includes a second parameter set and a third parameter set.

In block 305, it is determined, according to the second parameter set, whether the user equipment satisfies a second relaxation measurement criterion corresponding to the second relaxation measurement feature, and it is determined, according to the third parameter set, whether the user equipment satisfies a third relaxation measurement criterion corresponding to the second relaxation measurement feature.

In block 306, corresponding relaxation measurement is performed according to the relaxation measurement criterion satisfied by the user equipment.

In an embodiment, a user equipment sends indication information to a network device, for example, through an RRC message, and reports to the network device that the user equipment supports an RRM relaxation measurement feature and an RLMBFD relaxation measurement feature. After receiving the relaxation measurement features supported and reported by the user equipment, the network device sends configuration information to the user equipment, the configuration information including first configuration information, and the first configuration information including a determination parameter of a stationary criterion. The user equipment receives the first configuration information, and determines, according to the determination parameter of the stationary criterion, whether the user equipment satisfies the stationary criterion corresponding to the RRM relaxation measurement feature. If the user equipment does not satisfy the stationary criterion, the user equipment reports to the network device that the user equipment is in a non-stationary state, or does not report a state of the user equipment to the network device. After receiving the reporting information of the user equipment or not receiving the reporting information of the user equipment, the network device determines that the user equipment is in the non-stationary state, and sends third configuration information to the user equipment, the third configuration information including a determination parameter of a good cell signal quality criterion and a determination parameter of a low mobility criterion. The user equipment receives the third configuration information, and determines, according to the determination parameter of the good cell signal quality criterion and the determination parameter of the low mobility criterion, whether the user equipment satisfies the determination parameters of the good cell signal quality criterion and the low mobility criterion corresponding to the RLMBFD relaxation measurement feature. Finally, the user equipment performs the RLMBFD relaxation measurement according to the relaxation measurement criterion satisfied by the user equipment.

In the above implementation, taking the user equipment supporting both the RRM relaxation measurement feature and the RLMBFD relaxation measurement feature for example, the network device firstly sends the determination parameter of the stationary criterion to the user equipment, the user equipment firstly performs determination on the stationary criterion, and when the user equipment does not satisfy the stationary criterion, the network device then sends the determination parameter of the good cell signal quality criterion and the determination parameter of the low mobility criterion to the user equipment, and the user equipment performs determination on the good cell signal quality criterion and the low mobility criterion. As the determination on the stationary criterion is stricter than the determination on the low mobility criterion, on the premise that the user equipment satisfies the stationary criterion, the user equipment can perform a greater degree of relaxation when performing the RLMBFD relaxation measurement, so that more optimized RLMBFD relaxation measurement can be achieved.

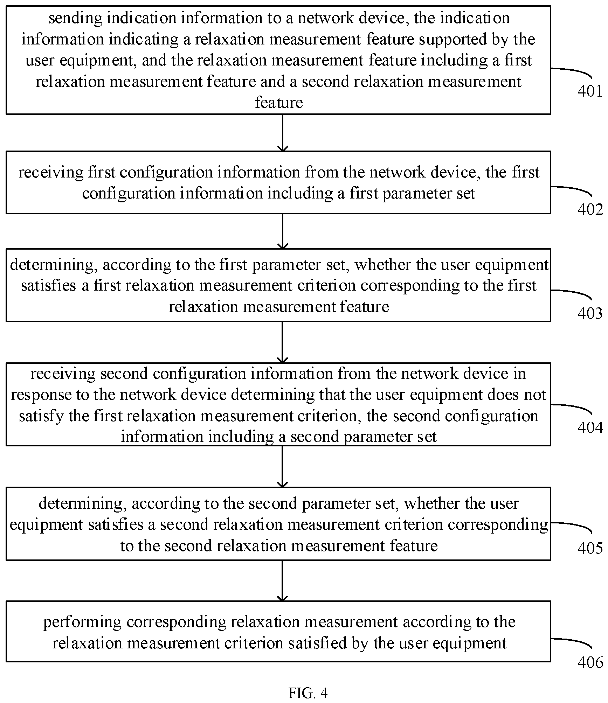

An embodiment of the present invention provides a measuring method performed by a user equipment. FIG. 4 is a flowchart of a measuring method according to an example embodiment, and as shown in FIG. 4, the method includes the following steps.

In block 401, indication information is sent to a network device, the indication information indicates a relaxation measurement feature supported by the user equipment, and the relaxation measurement feature includes a first relaxation measurement feature and a second relaxation measurement feature.

In block 402, first configuration information is received from the network device, the first configuration information includes a first parameter set.

In block 403, it is determined, according to the first parameter set, whether the user equipment satisfies a first relaxation measurement criterion corresponding to the first relaxation measurement feature.

In block 404, second configuration information is received from the network device in response to the network device determining that the user equipment does not satisfy the first relaxation measurement criterion, where the second configuration information includes a second parameter set.

In block 405, it is determined, according to the second parameter set, whether the user equipment satisfies a second relaxation measurement criterion corresponding to the second relaxation measurement feature.

In block 406, corresponding relaxation measurement is performed according to the relaxation measurement criterion satisfied by the user equipment.

In an embodiment, a user equipment sends indication information to a network device, for example, through an RRC message, and reports to the network device that the user equipment supports an RRM relaxation measurement feature and an RLMBFD relaxation measurement feature. After receiving the relaxation measurement features supported and reported by the user equipment, the network device sends configuration information to the user equipment, the configuration information including first configuration information, and the first configuration information including a determination parameter of a stationary criterion. The user equipment receives the first configuration information, and determines, according to the determination parameter of the stationary criterion, whether the user equipment satisfies the stationary criterion corresponding to the RRM relaxation measurement feature. If the user equipment does not satisfy the stationary criterion, the user equipment reports to the network device that the user equipment is in a non-stationary state, or does not report a state of the user equipment to the network device. After receiving the reporting information of the user equipment or not receiving the reporting information of the user equipment, the network device determines that the user equipment is in the non-stationary state, and sends second configuration information to the user equipment, the second configuration information including a determination parameter of a good cell signal quality criterion. The user equipment receives the second configuration information, and determines, according to the determination parameter of the good cell signal quality criterion, whether the user equipment satisfies the good cell signal quality criterion corresponding to the RLMBFD relaxation measurement feature. Finally, the user equipment performs the RLMBFD relaxation measurement according to the relaxation measurement criterion satisfied by the user equipment.

It should be noted that as a parameter of a low mobility criterion is optionally configured when the user equipment performs determination on the RLMBFD relaxation measurement, namely when the user equipment does not receive the parameter of the low mobility criterion, it is not necessary to determine mobility of the user equipment according to the low mobility criterion, in the implementation, when the user equipment does not satisfy the stationary criterion, only determination on the good cell signal quality criterion is performed, and whether to perform RLM/BFD relaxation measurement is determined according to a determination result of the good cell signal quality criterion.

In the above implementation, taking the user equipment supporting both the RRM relaxation measurement feature and the RLMBFD relaxation measurement feature for example, the network device firstly sends the determination parameter of the stationary criterion to the user equipment, the user equipment firstly performs determination on the stationary criterion, and when the user equipment does not satisfy the stationary criterion, the network device then sends the determination parameter of the good cell signal quality criterion to the user equipment, and the user equipment performs determination on the good cell signal quality criterion. As the determination on the stationary criterion is stricter than the determination on the low mobility criterion, on the premise that the user equipment satisfies the stationary criterion, the user equipment can perform a greater degree of relaxation when performing the RLMBFD relaxation measurement, so that more optimized RLM/BFD relaxation measurement can be achieved.

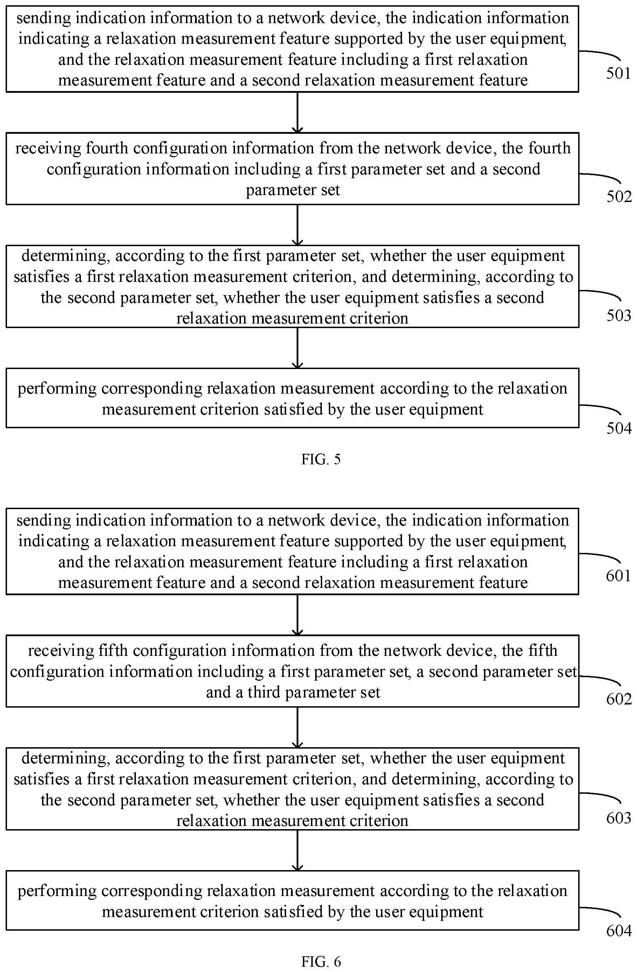

An embodiment of the present invention provides a measuring method performed by a user equipment. FIG. 5 is a flowchart of a measuring method according to an example embodiment, and as shown in FIG. 5, the method includes the following steps.

In block 501, indication information is sent to a network device, the indication information indicates a relaxation measurement feature supported by the user equipment, and the relaxation measurement feature includes a first relaxation measurement feature and a second relaxation measurement feature.

In block 502, fourth configuration information is received from the network device, the fourth configuration information includes a first parameter set and a second parameter set.

In block 503, it is determined, according to the first parameter set, whether the user equipment satisfies a first relaxation measurement criterion corresponding to the first relaxation measurement feature, and it is determined, according to the second parameter set, whether the user equipment satisfies a second relaxation measurement criterion corresponding to the second relaxation measurement feature.

In block 504, corresponding relaxation measurement is performed according to the relaxation measurement criterion satisfied by the user equipment.

In an embodiment, a user equipment sends indication information to a network device, for example, through an RRC message, and reports to the network device that the user equipment supports an RRM relaxation measurement feature and an RLMBFD relaxation measurement feature. After receiving the relaxation measurement features supported and reported by the user equipment, the network device sends fourth configuration information to the user equipment, the fourth configuration information including a determination parameter of a stationary criterion corresponding to the RRM relaxation measurement feature and a determination parameter of a good cell signal quality criterion corresponding to the RLM/BFD relaxation measurement feature. The user equipment receives the fourth configuration information, and determines, according to the determination parameter of the stationary criterion and the determination parameter of the good cell signal quality criterion, whether the user equipment satisfies the stationary criterion and the good cell signal quality criterion. The user equipment then performs the corresponding relaxation measurement according to the relaxation measurement criterion satisfied by the user equipment.

In the above implementation, taking the user equipment supporting both the RRM relaxation measurement feature and the RLMBFD relaxation measurement feature for example, the network device sends the determination parameter of the stationary criterion and the determination parameter of the good cell signal quality criterion to the user equipment, and the user equipment performs determination on the stationary criterion and the good cell signal quality criterion. As the determination on the stationary criterion is stricter than the determination on the low mobility criterion, on the premise that the user equipment satisfies the stationary criterion, the user equipment can perform a greater degree of relaxation when performing the RLMBFD relaxation measurement, so that more optimized RLMBFD relaxation measurement can be achieved.

An embodiment of the present invention provides a measuring method performed by a user equipment. FIG. 6 is a flowchart of a measuring method according to an example embodiment, and as shown in FIG. 6, the method includes the following steps.

In block 601, indication information is sent to a network device, the indication information indicates a relaxation measurement feature supported by the user equipment, and the relaxation measurement feature includes a first relaxation measurement feature and a second relaxation measurement feature.

In block 602, fifth configuration information is received from the network device, the fifth configuration information includes a first parameter set, a second parameter set and a third parameter set.

In block 603, it is determined, according to the first parameter set, whether the user equipment satisfies a first relaxation measurement criterion corresponding to the first relaxation measurement feature, and it is determined, according to the second parameter set, whether the user equipment satisfies a second relaxation measurement criterion corresponding to the second relaxation measurement feature.

In block 604, corresponding relaxation measurement is performed according to the relaxation measurement criterion satisfied by the user equipment.

The third parameter set is used for determining whether the user equipment satisfies a third relaxation measurement criterion corresponding to the second relaxation measurement feature.

In an embodiment, a user equipment sends indication information to a network device, for example, through an RRC message, and reports to the network device that the user equipment supports an RRM relaxation measurement feature and an RLMBFD relaxation measurement feature. After receiving the relaxation measurement features supported and reported by the user equipment, the network device sends fifth configuration information to the user equipment, the fifth configuration information including a determination parameter of a stationary criterion corresponding to the RRM relaxation measurement feature, and a determination parameter of a good cell signal quality criterion and a determination parameter of a low mobility criterion corresponding to the RLMBFD relaxation measurement feature. The user equipment receives the fifth configuration information, and determines, according to the determination parameter of the stationary criterion and the determination parameter of the good cell signal quality criterion, whether the user equipment satisfies the stationary criterion and the good cell signal quality criterion. The user equipment then performs the corresponding relaxation measurement according to the relaxation measurement criterion satisfied by the user equipment.

It should be noted that although the user equipment receives the determination parameter of the stationary criterion, the determination parameter of the good cell signal quality criterion, and the determination parameter of the low mobility criterion, the user equipment will not perform determination on the stationary criterion and the low mobility criterion simultaneously. This is because the stationary criterion and the low mobility criterion are both determination regarding the mobility of the user equipment, and determination objects both involve an L3 RSRP of a primary serving cell, so that the user equipment selects one from the stationary criterion and the low mobility criterion for determination.

The user equipment can select to determine the stationary criterion or the low mobility criterion according to an own state or agreement of a protocol. In an embodiment, the user equipment selects to determine the stationary criterion or the low mobility criterion according to the own state, such as an electric quantity. In another implementation, the user equipment selects to determine the stationary criterion or the low mobility criterion according to the agreement of the communication protocol. For example, the communication protocol agrees that the user equipment tends to select to determine the stationary criterion.

In the above implementation, taking the user equipment supporting both the RRM relaxation measurement feature and the RLMBFD relaxation measurement feature for example, the network device sends the determination parameter of the stationary criterion, the determination parameter of the good cell signal quality criterion and the determination parameter of the low mobility criterion to the user equipment. The user equipment determines the good cell signal quality criterion, and selects one of the stationary criterion and the low mobility criterion for determination. As the determination on the stationary criterion is stricter than the determination on the low mobility criterion, on the premise that the user equipment satisfies the stationary criterion, the user equipment can perform a greater degree of relaxation when performing the RLM/BFD relaxation measurement, so that more optimized RLMBFD relaxation measurement can be achieved.

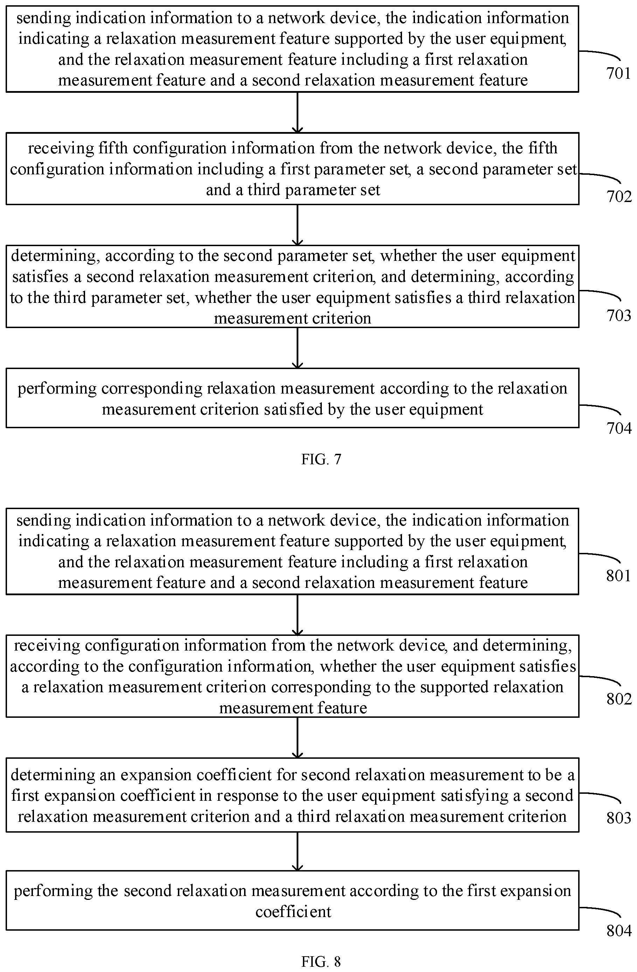

An embodiment of the present invention provides a measuring method performed by a user equipment. FIG. 7 is a flowchart of a measuring method according to an example embodiment, and as shown in FIG. 7, the method includes the following steps.

In block 701, indication information is sent to a network device, the indication information indicates a relaxation measurement feature supported by the user equipment, and the relaxation measurement feature includes a first relaxation measurement feature and a second relaxation measurement feature.

In block 702, fifth configuration information is received from the network device, the fifth configuration information includes a first parameter set, a second parameter set and a third parameter set.

In block 703, it is determined, according to the second parameter set, whether the user equipment satisfies a second relaxation measurement criterion corresponding to the second relaxation measurement feature, and it is determined, according to the third parameter set, whether the user equipment satisfies a third relaxation measurement criterion corresponding to the second relaxation measurement feature.

In block 704, corresponding relaxation measurement is performed according to the relaxation measurement criterion satisfied by the user equipment.

The first parameter set is used for determining whether the user equipment satisfies a first relaxation measurement criterion corresponding to the first relaxation measurement feature.

In an embodiment, a user equipment sends indication information to a network device, for example, through an RRC message, and reports to the network device that the user equipment supports an RRM relaxation measurement feature and an RLMBFD relaxation measurement feature. After receiving the relaxation measurement features supported and reported by the user equipment, the network device sends fifth configuration information to the user equipment, the fifth configuration information including a determination parameter of a stationary criterion corresponding to the RRM relaxation measurement feature, and a determination parameter of a good cell signal quality criterion and a determination parameter of a low mobility criterion corresponding to the RLMBFD relaxation measurement feature. The user equipment receives the fifth configuration information, and determines, according to the determination parameter of the low mobility criterion and the determination parameter of the good cell signal quality criterion, whether the user equipment satisfies the low mobility criterion and the good cell signal quality criterion. The user equipment then performs the corresponding relaxation measurement according to the relaxation measurement criterion satisfied by the user equipment.

As described above, the user equipment can select to determine the stationary criterion or the low mobility criterion according to an own state or agreement of a protocol.

In the above implementation, taking the user equipment supporting both the RRM relaxation measurement feature and the RLMBFD relaxation measurement feature for example, the network device sends the determination parameter of the stationary criterion, the determination parameter of the good cell signal quality criterion and the determination parameter of the low mobility criterion to the user equipment. The user equipment determines the good cell signal quality criterion, and selects one of the stationary criterion and the low mobility criterion for determination. As the determination on the stationary criterion is stricter than the determination on the low mobility criterion, on the premise that the user equipment satisfies the stationary criterion, the user equipment can perform a greater degree of relaxation when performing the RLM/BFD relaxation measurement, so that more optimized RLMBFD relaxation measurement can be achieved.

An embodiment of the present invention provides a measuring method performed by a user equipment. FIG. 8 is a flowchart of a measuring method according to an example embodiment, and as shown in FIG. 8, the method includes the following steps.

In block 801, indication information is sent to a network device, the indication information indicates a relaxation measurement feature supported by the user equipment, and the relaxation measurement feature includes a first relaxation measurement feature and a second relaxation measurement feature.

In block 802, configuration information is received from the network device, and it is determined, according to the configuration information, whether the user equipment satisfies a relaxation measurement criterion corresponding to the supported relaxation measurement feature.

In block 803, an expansion coefficient for the second relaxation measurement is determined to be a first expansion coefficient in response to the user equipment satisfying the second relaxation measurement criterion and the third relaxation measurement criterion.

In block 804, the second relaxation measurement is performed according to the first expansion coefficient.

The second relaxation measurement criterion and the third relaxation measurement criterion both correspond to the second relaxation measurement feature.

In an embodiment, a user equipment sends indication information to a network device, for example, through an RRC message, and reports to the network device that the user equipment supports an RRM relaxation measurement feature and an RLMBFD relaxation measurement feature. After receiving the relaxation measurement features supported and reported by the user equipment, the network device sends configuration information to the user equipment, and the user equipment receives the configuration information, and determines, according to the configuration information, whether the user equipment satisfies a relaxation measurement criterion corresponding to the supported relaxation measurement feature. If the user equipment satisfies the second relaxation measurement criterion and the third relaxation measurement criterion, namely satisfies the good cell signal quality criterion and the low mobility criterion, the user equipment determines an expansion coefficient for RLM/BFD relaxation measurement to be a first expansion coefficient K1. The user equipment performs the RLMBFD relaxation measurement according to the first expansion coefficient K1.

In the above implementation, taking the user equipment supporting both the RRM relaxation measurement feature and the RLMBFD relaxation measurement feature for example, the network device firstly sends the determination parameter of the stationary criterion to the user equipment, the user equipment firstly performs determination on the stationary criterion, and then performs determination on the relaxation measurement criterion corresponding to the RLMBFD relaxation measurement feature. As the determination on the stationary criterion is stricter than the determination on the low mobility criterion, on the premise that the user equipment satisfies the stationary criterion, the user equipment can perform a greater degree of relaxation when performing the RLMBFD relaxation measurement, so that more optimized RLMBFD relaxation measurement can be achieved.

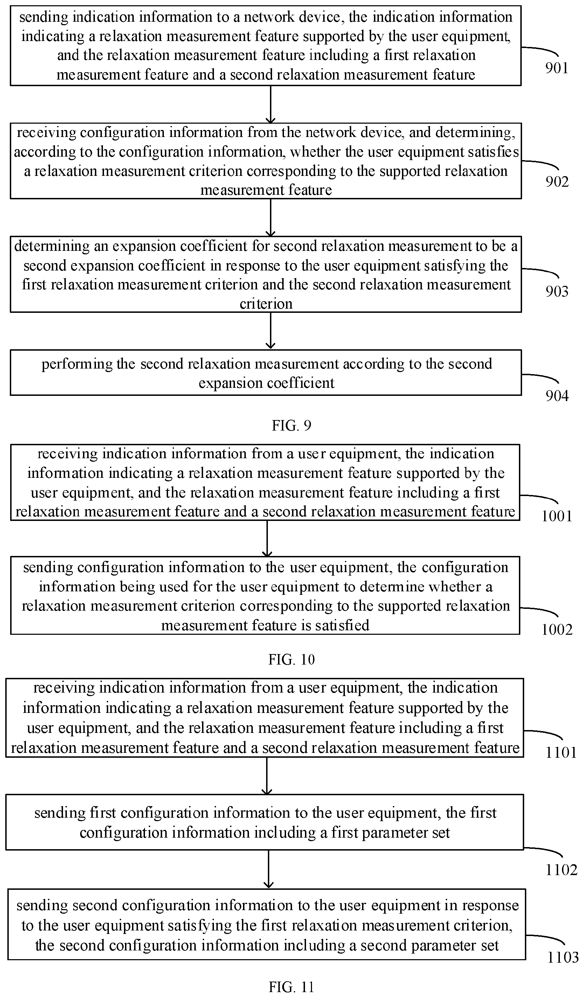

An embodiment of the present invention provides a measuring method performed by a user equipment. FIG. 9 is a flowchart of a measuring method according to an example embodiment, and as shown in FIG. 9, the method includes the following steps.

In block 901, indication information is sent to a network device, the indication information indicates a relaxation measurement feature supported by the user equipment, and the relaxation measurement feature includes a first relaxation measurement feature and a second relaxation measurement feature.

In block 902, configuration information is received from the network device, and it is determined, according to the configuration information, whether the user equipment satisfies a relaxation measurement criterion corresponding to the supported relaxation measurement feature.

In block 903, an expansion coefficient for the second relaxation measurement is determined to be a second expansion coefficient in response to the user equipment satisfying the first relaxation measurement criterion and the second relaxation measurement criterion.

In block 904, the second relaxation measurement is performed according to the second expansion coefficient.

The first relaxation measurement criterion corresponds to the first relaxation measurement feature, and the second relaxation measurement criterion corresponds to the second relaxation measurement feature.

In an embodiment, a user equipment sends indication information to a network device, for example, through an RRC message, and reports to the network device that the user equipment supports an RRM relaxation measurement feature and an RLMBFD relaxation measurement feature. After receiving the relaxation measurement features supported and reported by the user equipment, the network device sends configuration information to the user equipment, and the user equipment receives the configuration information, and determines, according to the configuration information, whether the user equipment satisfies a relaxation measurement criterion corresponding to the supported relaxation measurement feature. If the user equipment satisfies the first relaxation measurement criterion and the second relaxation measurement criterion, namely satisfies the stationary criterion and the good cell signal quality criterion, the user equipment determines an expansion coefficient for RLM/BFD relaxation measurement to be a second expansion coefficient K2. The user equipment performs the RLMBFD relaxation measurement according to the second expansion coefficient K2.

It should be noted that when the user equipment satisfies the good cell signal quality criterion and the low mobility criterion, the expansion coefficient for the RLMBFD relaxation measurement is the first expansion coefficient K1. When the user equipment satisfies the stationary criterion and the good cell signal quality criterion, the expansion coefficient for the RLMBFD relaxation measurement is the second expansion coefficient K2. The second expansion coefficient K2 is greater than the first expansion coefficient K1. This is because the determination on the stationary criterion is stricter than the determination on the low mobility criterion, and if the user equipment satisfies the stationary criterion, the user equipment can perform a greater degree of relaxation.

In the above implementation, taking the user equipment supporting both the RRM relaxation measurement feature and the RLMBFD relaxation measurement feature for example, the network device firstly sends the determination parameter of the relaxation measurement criterion to the user equipment, and the user equipment performs determination on the relaxation measurement criterion. As the determination on the stationary criterion is stricter than the determination on the low mobility criterion, on the premise that the user equipment satisfies the stationary criterion, the user equipment can perform a greater degree of relaxation when performing the RLMBFD relaxation measurement, so that more optimized RLMBFD relaxation measurement can be achieved.

An embodiment of the present invention provides a measuring method performed by a network device. FIG. 10 is a flowchart of a measuring method according to an example embodiment, and as shown in FIG. 10, the method includes the following steps.

In block 1001, indication information is received from a user equipment, the indication information indicates a relaxation measurement feature supported by the user equipment, and the relaxation measurement feature includes a first relaxation measurement feature and a second relaxation measurement feature.

In block 1002, configuration information is sent to the user equipment, the configuration information is used for the user equipment to determine whether a relaxation measurement criterion corresponding to the supported relaxation measurement feature is satisfied.

In an embodiment, a user equipment sends indication information to a network device, for example, through an RRC message, and reports a relaxation measurement feature supported by the user equipment to the network device, the relaxation measurement feature including two types of relaxation measurement features: a first relaxation measurement feature and a second relaxation measurement feature. After receiving the relaxation measurement feature supported and reported by the user equipment, the network device sends configuration information to the user equipment, the configuration information being used for the user equipment to determine whether the user equipment satisfies a relaxation measurement criterion corresponding to the supported relaxation measurement feature, so that the user equipment performs the corresponding relaxation measurement.

As described above, the first relaxation measurement feature is an RRM relaxation measurement feature, and the second relaxation measurement feature is an RLMBFD relaxation measurement feature. A first relaxation measurement criterion corresponding to the first relaxation measurement feature is a stationary criterion, and a second relaxation measurement criterion and a third relaxation measurement criterion corresponding to the second relaxation measurement feature are a good cell signal quality criterion and a low mobility criterion, respectively.

For convenience of explanation, the implementations described below are all exemplified with the first relaxation measurement feature being the RRM relaxation measurement feature and the second relaxation measurement feature being the RLMBFD relaxation measurement feature. As previously described, the relaxation measurement criterion corresponding to the RRM relaxation measurement feature is the stationary criterion, and the relaxation measurement criterion corresponding to the RLMBFD relaxation measurement feature is the good serving cell signal quality criterion and the low mobility criterion.

In the above implementation, taking the user equipment supporting both the RRM relaxation measurement feature and the RLMBFD relaxation measurement feature for example, after receiving the indication information that the user equipment supports the RRM relaxation measurement feature and the RLMBFD relaxation measurement feature, the network device sends configuration information to the user equipment, so that the user equipment determines, according to the configuration information, a relaxation measurement criterion satisfied by the user equipment, so as to determine a relaxation degree of the RLMBFD measurement, and achieve more optimized RLMBFD relaxation measurement.

An embodiment of the present invention provides a measuring method performed by a network device. The method includes: receiving indication information from a user equipment, the indication information indicating a relaxation measurement feature supported by the user equipment, and the relaxation measurement feature including a first relaxation measurement feature and a second relaxation measurement feature; and sending configuration information to the user equipment, the configuration information being used for the user equipment to determine whether a relaxation measurement criterion corresponding to the supported relaxation measurement feature is satisfied.

Sending the configuration information to the user equipment includes: sending first configuration information to the user equipment, the first configuration information including a first parameter set, and the first parameter set being used for determining whether the user equipment satisfies a first relaxation measurement criterion corresponding to the first relaxation measurement feature.

In an embodiment, a user equipment sends indication information to a network device, for example, through an RRC message, and reports a relaxation measurement feature supported by the user equipment to the network device, the relaxation measurement feature including two types of relaxation measurement features: a first relaxation measurement feature and a second relaxation measurement feature. After receiving the relaxation measurement feature supported and reported by the user equipment, the network device sends configuration information to the user equipment, the configuration information including first configuration information, and the first configuration information including a first parameter set. The user equipment can determine, according to the first parameter set, whether the user equipment satisfies a first relaxation measurement criterion corresponding to the first relaxation measurement feature.

In an embodiment, a user equipment sends indication information to a network device, for example, through an RRC message, and reports to the network device that the user equipment supports an RRM relaxation measurement feature and an RLMBFD relaxation measurement feature. After receiving the relaxation measurement features supported and reported by the user equipment, the network device sends configuration information to the user equipment, the configuration information including first configuration information, and the first configuration information including a determination parameter of a stationary criterion. The user equipment receives the first configuration information, and determines, according to the determination parameter of the stationary criterion, whether the user equipment satisfies the stationary criterion corresponding to the RRM relaxation measurement feature.

In the above implementation, taking the user equipment supporting both the RRM relaxation measurement feature and the RLMBFD relaxation measurement feature for example, after receiving the indication information that the user equipment supports the RRM relaxation measurement feature and the RLMBFD relaxation measurement feature, the network device firstly sends the determination parameter of the stationary criterion to the user equipment, and the user equipment firstly performs determination on the stationary criterion, and then performs determination on the relaxation measurement criterion corresponding to the RLMBFD relaxation measurement feature. As the determination on the stationary criterion is stricter than the determination on the low mobility criterion, on the premise that the user equipment satisfies the stationary criterion, the user equipment can perform a greater degree of relaxation when performing the RLMBFD relaxation measurement, so that more optimized RLMBFD relaxation measurement can be achieved.

An embodiment of the present invention provides a measuring method performed by a network device. FIG. 11 is a flowchart of a measuring method according to an example embodiment, and as shown in FIG. 11, the method includes the following steps.

In block 1101, indication information is received from a user equipment, the indication information indicates a relaxation measurement feature supported by the user equipment, and the relaxation measurement feature includes a first relaxation measurement feature and a second relaxation measurement feature.

In block 1102, first configuration information is sent to the user equipment, the first configuration information includes a first parameter set, and the first parameter set is used for determining whether the user equipment satisfies a first relaxation measurement criterion corresponding to the first relaxation measurement feature.

In block 1103, second configuration information is sent to the user equipment in response to the user equipment satisfying the first relaxation measurement criterion, where the second configuration information includes a second parameter set, and the second parameter set is used for determining whether the user equipment satisfies a second relaxation measurement criterion corresponding to the second relaxation measurement feature.

In an embodiment, a user equipment sends indication information to a network device, for example, through an RRC message, and reports to the network device that the user equipment supports an RRM relaxation measurement feature and an RLMBFD relaxation measurement feature. After receiving the relaxation measurement features supported and reported by the user equipment, the network device sends configuration information to the user equipment, the configuration information including first configuration information, and the first configuration information including a determination parameter of a stationary criterion. The user equipment receives the first configuration information, and determines, according to the determination parameter of the stationary criterion, whether the user equipment satisfies the stationary criterion corresponding to the RRM relaxation measurement feature. If the user equipment satisfies the stationary criterion, the user equipment reports to the network device that the user equipment is in a stationary state. After receiving the reporting information of the user equipment, the network device sends second configuration information to the user equipment, the second configuration information including a determination parameter of a good cell signal quality criterion, so that the user equipment determines, according to the determination parameter of the good cell signal quality criterion, whether the user equipment satisfies the good cell signal quality criterion corresponding to the RLMBFD relaxation measurement feature.

In the above implementation, taking the user equipment supporting both the RRM relaxation measurement feature and the RLMBFD relaxation measurement feature for example, after receiving the indication information that the user equipment supports the RRM relaxation measurement feature and the RLMBFD relaxation measurement feature, the network device firstly sends the determination parameter of the stationary criterion to the user equipment, and when the user equipment satisfies the stationary criterion, the network device then sends the determination parameter of the good cell signal quality criterion to the user equipment, and the user equipment performs determination on the good cell signal quality criterion. As the determination on the stationary criterion is stricter than the determination on the low mobility criterion, on the premise that the user equipment satisfies the stationary criterion, the user equipment can perform a greater degree of relaxation when performing the RLMBFD relaxation measurement, so that more optimized RLMBFD relaxation measurement can be achieved.

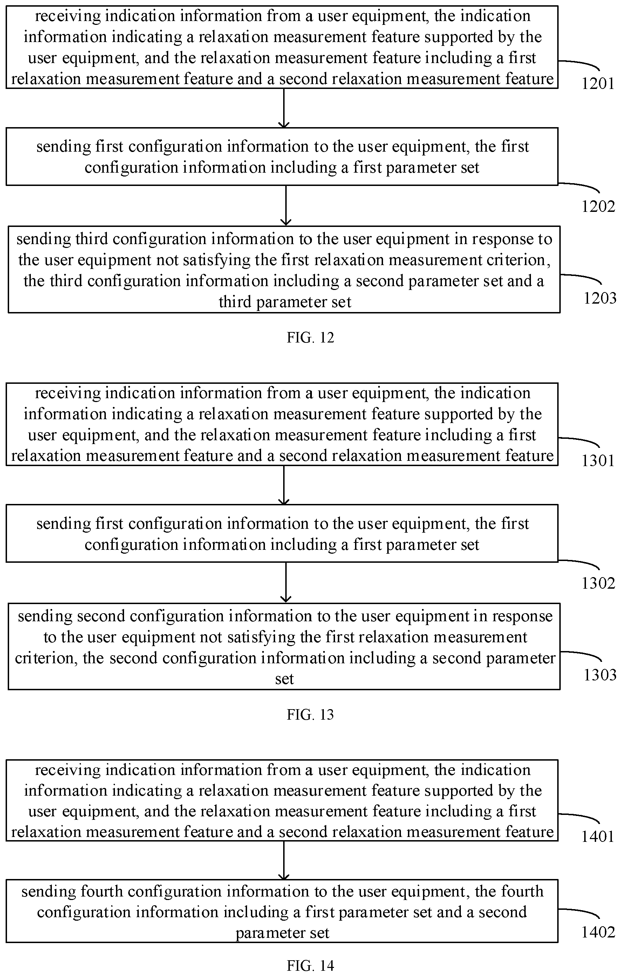

An embodiment of the present invention provides a measuring method performed by a network device. FIG. 12 is a flowchart of a measuring method according to an example embodiment, and as shown in FIG. 12, the method includes the following steps.

In block 1201, indication information is received from a user equipment, the indication information indicates a relaxation measurement feature supported by the user equipment, and the relaxation measurement feature includes a first relaxation measurement feature and a second relaxation measurement feature.

In block 1202, first configuration information is sent to the user equipment, the first configuration information includes a first parameter set, and the first parameter set is used for determining whether the user equipment satisfies a first relaxation measurement criterion corresponding to the first relaxation measurement feature.

In block 1203, third configuration information is sent to the user equipment in response to the user equipment not satisfying the first relaxation measurement criterion, the third configuration information includes a second parameter set and a third parameter set, the second parameter set is used for determining whether the user equipment satisfies a second relaxation measurement criterion corresponding to the second relaxation measurement feature, and the third parameter set is used for determining whether the user equipment satisfies a third relaxation measurement criterion corresponding to the second relaxation measurement feature.

In an embodiment, a user equipment sends indication information to a network device, for example, through an RRC message, and reports to the network device that the user equipment supports an RRM relaxation measurement feature and an RLMBFD relaxation measurement feature. After receiving the relaxation measurement features supported and reported by the user equipment, the network device sends configuration information to the user equipment, the configuration information including first configuration information, and the first configuration information including a determination parameter of a stationary criterion. The user equipment receives the first configuration information, and determines, according to the determination parameter of the stationary criterion, whether the user equipment satisfies the stationary criterion corresponding to the RRM relaxation measurement feature. If the user equipment does not satisfy the stationary criterion, the user equipment reports to the network device that the user equipment is in a non-stationary state, or does not report a state of the user equipment to the network device. After receiving the reporting information of the user equipment or not receiving the reporting information of the user equipment, the network device determines that the user equipment is in the non-stationary state, and sends third configuration information to the user equipment, the third configuration information including a determination parameter of a good cell signal quality criterion and a determination parameter of a low mobility criterion. The user equipment receives the third configuration information, and determines, according to the determination parameter of the good cell signal quality criterion and the determination parameter of the low mobility criterion, whether the user equipment satisfies the determination parameters of the good cell signal quality criterion and the low mobility criterion corresponding to the RLMBFD relaxation measurement feature.

In the above implementation, taking the user equipment supporting both the RRM relaxation measurement feature and the RLMBFD relaxation measurement feature for example, after receiving the indication information that the user equipment supports the RRM relaxation measurement feature and the RLMBFD relaxation measurement feature, the network device firstly sends the determination parameter of the stationary criterion to the user equipment, and when the user equipment does not satisfy the stationary criterion, the network device then sends the determination parameter of the good cell signal quality criterion and the determination parameter of the low mobility criterion to the user equipment, and the user equipment performs determination on the good cell signal quality criterion and the low mobility criterion. As the determination on the stationary criterion is stricter than the determination on the low mobility criterion, on the premise that the user equipment satisfies the stationary criterion, the user equipment can perform a greater degree of relaxation when performing the RLMBFD relaxation measurement, so that more optimized RLMBFD relaxation measurement can be achieved.

An embodiment of the present invention provides a measuring method performed by a network device. FIG. 13 is a flowchart of a measuring method according to an example embodiment, and as shown in FIG. 13, the method includes the following steps.

In block 1301, indication information is received from a user equipment, the indication information indicates a relaxation measurement feature supported by the user equipment, and the relaxation measurement feature includes a first relaxation measurement feature and a second relaxation measurement feature.

In block 1302, first configuration information is sent to the user equipment, the first configuration information includes a first parameter set, and the first parameter set is used for determining whether the user equipment satisfies a first relaxation measurement criterion corresponding to the first relaxation measurement feature.

In block 1303, second configuration information is sent to the user equipment in response to the user equipment not satisfying the first relaxation measurement criterion, where the second configuration information includes a second parameter set, and the second parameter set is used for determining whether the user equipment satisfies a second relaxation measurement criterion corresponding to the second relaxation measurement feature.

In an embodiment, a user equipment sends indication information to a network device, for example, through an RRC message, and reports to the network device that the user equipment supports an RRM relaxation measurement feature and an RLMBFD relaxation measurement feature. After receiving the relaxation measurement features supported and reported by the user equipment, the network device sends configuration information to the user equipment, the configuration information including first configuration information, and the first configuration information including a determination parameter of a stationary criterion. The user equipment receives the first configuration information, and determines, according to the determination parameter of the stationary criterion, whether the user equipment satisfies the stationary criterion corresponding to the RRM relaxation measurement feature. If the user equipment does not satisfy the stationary criterion, the user equipment reports to the network device that the user equipment is in a non-stationary state, or does not report a state of the user equipment to the network device. After receiving the reporting information of the user equipment or not receiving the reporting information of the user equipment, the network device determines that the user equipment is in the non-stationary state, and sends second configuration information to the user equipment, the second configuration information including a determination parameter of a good cell signal quality criterion. The user equipment receives the second configuration information, and determines, according to the determination parameter of the good cell signal quality criterion, whether the user equipment satisfies the good cell signal quality criterion corresponding to the RLMBFD relaxation measurement feature.

It should be noted that as the low mobility criterion is optional when the user equipment performs determination on the RLMBFD relaxation measurement, namely the determination on the criterion is not compulsory, in the implementation, when the user equipment does not satisfy the stationary criterion, the network device only sends the determination parameter of the good cell signal quality criterion to the user equipment, so that the user equipment determines, according to a determination result of the good cell signal quality criterion, whether to perform the RLMBFD relaxation measurement.

In the above implementation, taking the user equipment supporting both the RRM relaxation measurement feature and the RLMBFD relaxation measurement feature for example, after receiving the indication information that the user equipment supports the RRM relaxation measurement feature and the RLMBFD relaxation measurement feature, the network device firstly sends the determination parameter of the stationary criterion to the user equipment, and when the user equipment does not satisfy the stationary criterion, the network device then sends the determination parameter of the good cell signal quality criterion to the user equipment, and the user equipment performs determination on the good cell signal quality criterion. As the determination on the stationary criterion is stricter than the determination on the low mobility criterion, on the premise that the user equipment satisfies the stationary criterion, the user equipment can perform a greater degree of relaxation when performing the RLMBFD relaxation measurement, so that more optimized RLMBFD relaxation measurement can be achieved.

An embodiment of the present invention provides a measuring method performed by a network device. FIG. 14 is a flowchart of a measuring method according to an example embodiment, and as shown in FIG. 14, the method includes the following steps.

In block 1401, indication information is received from a user equipment, the indication information indicates a relaxation measurement feature supported by the user equipment, and the relaxation measurement feature includes a first relaxation measurement feature and a second relaxation measurement feature.

In block 1402, fourth configuration information is sent to the user equipment, the fourth configuration information includes: a first parameter set and a second parameter set.

The first parameter set is used for determining whether the user equipment satisfies a first relaxation measurement criterion corresponding to the first relaxation measurement feature, and the second parameter set is used for determining whether the user equipment satisfies a second relaxation measurement criterion corresponding to the second relaxation measurement feature.

In an embodiment, a user equipment sends indication information to a network device, for example, through an RRC message, and reports to the network device that the user equipment supports an RRM relaxation measurement feature and an RLMBFD relaxation measurement feature. After receiving the relaxation measurement features supported and reported by the user equipment, the network device sends fourth configuration information to the user equipment, the fourth configuration information including a determination parameter of a stationary criterion corresponding to the RRM relaxation measurement feature and a determination parameter of a good cell signal quality criterion corresponding to the RLM/BFD relaxation measurement feature. The user equipment receives the fourth configuration information, and determines, according to the determination parameter of the stationary criterion and the determination parameter of the good cell signal quality criterion, whether the user equipment satisfies the stationary criterion and the good cell signal quality criterion.

In the above implementation, taking the user equipment supporting both the RRM relaxation measurement feature and the RLMBFD relaxation measurement feature for example, after receiving the indication information that the user equipment supports the RRM relaxation measurement feature and the RLMBFD relaxation measurement feature, the network device sends the determination parameter of the stationary criterion and the determination parameter of the good cell signal quality criterion to the user equipment, and the user equipment performs determination on the stationary criterion and the good cell signal quality criterion. As the determination on the stationary criterion is stricter than the determination on the low mobility criterion, on the premise that the user equipment satisfies the stationary criterion, the user equipment can perform a greater degree of relaxation when performing the RLMBFD relaxation measurement, so that more optimized RLMBFD relaxation measurement can be achieved.

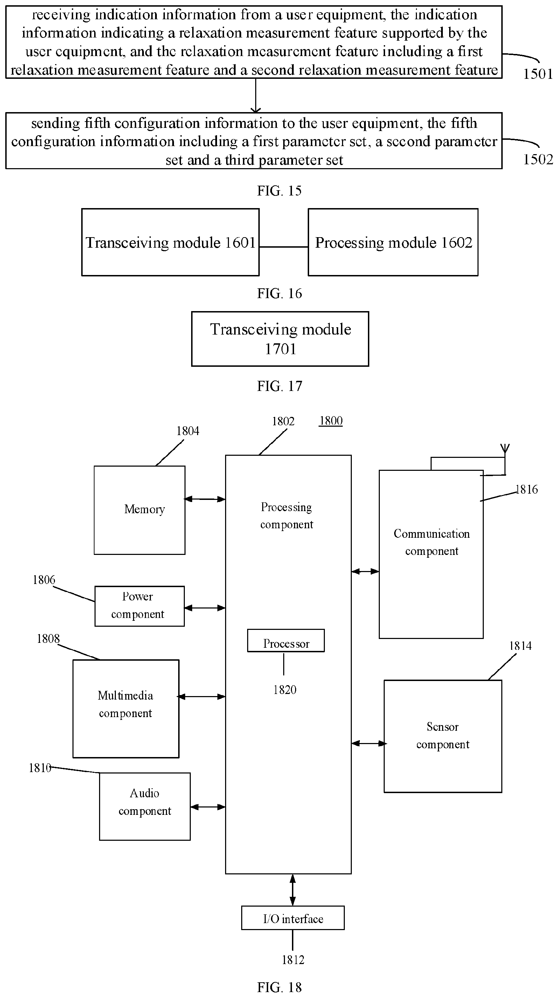

An embodiment of the present invention provides a measuring method performed by a network device. FIG. 15 is a flowchart of a measuring method according to an example embodiment, and as shown in FIG. 15, the method includes the following steps.

In block 1501, indication information is received from a user equipment, the indication information indicates a relaxation measurement feature supported by the user equipment, and the relaxation measurement feature includes a first relaxation measurement feature and a second relaxation measurement feature.

In block 1502, fifth configuration information is sent to the user equipment, the fifth configuration information includes: a first parameter set, a second parameter set and a third parameter set.

The first parameter set is used for determining whether the user equipment satisfies a first relaxation measurement criterion corresponding to the first relaxation measurement feature, the second parameter set is used for determining whether the user equipment satisfies a second relaxation measurement criterion corresponding to the second relaxation measurement feature, and the third parameter set is used for determining whether the user equipment satisfies a third relaxation measurement criterion corresponding to the second relaxation measurement feature.

In an embodiment, a user equipment sends indication information to a network device, for example, through an RRC message, and reports to the network device that the user equipment supports an RRM relaxation measurement feature and an RLMBFD relaxation measurement feature. After receiving the relaxation measurement features supported and reported by the user equipment, the network device sends fourth configuration information to the user equipment, the fourth configuration information including a determination parameter of a stationary criterion corresponding to the RRM relaxation measurement feature, and a determination parameter of a good cell signal quality criterion and a determination parameter of a low mobility criterion corresponding to the RLMBFD relaxation measurement feature. The user equipment receives the fourth configuration information, and determines whether the user equipment satisfies the corresponding relaxation measurement criterion.

In the above implementation, taking the user equipment supporting both the RRM relaxation measurement feature and the RLMBFD relaxation measurement feature for example, after receiving the indication information that the user equipment supports the RRM relaxation measurement feature and the RLMBFD relaxation measurement feature, the network device sends the determination parameter of the stationary criterion, the determination parameter of the good cell signal quality criterion and the determination parameter of the low mobility criterion to the user equipment. As the determination on the stationary criterion is stricter than the determination on the low mobility criterion, on the premise that the user equipment satisfies the stationary criterion, the user equipment can perform a greater degree of relaxation when performing the RLMBFD relaxation measurement, so that more optimized RLMBFD relaxation measurement can be achieved.

An embodiment of the present invention provides a measuring method, and the method includes the following steps. A user equipment reports to a network device that the user equipment supports an RRM relaxation measurement feature and an RLMBFD relaxation measurement feature through an RRC message. After receiving the relaxation measurement features supported and reported by the user equipment, the network device configures a determination parameter of a stationary criterion for the user equipment, and sends the determination parameter of the stationary criterion to the user equipment. The user equipment determines, according to the received determination parameter of the stationary criterion, whether the user equipment satisfies the stationary criterion.

If the user equipment determines that the user equipment satisfies the stationary criterion, the user equipment reports to the network device that the user equipment is in a stationary state. After receiving the state reported by the user equipment, the network device determines that the user equipment is in the stationary state, configures a determination parameter of a good cell signal quality criterion for the user equipment, and sends the determination parameter to the user equipment. The user equipment receives the determination parameter of the good cell signal quality criterion, and determines whether the user equipment satisfies the good cell signal quality criterion. If the user equipment satisfies the good cell signal quality criterion, the user equipment determines an expansion coefficient for RLM/BFD relaxation measurement to be a second expansion coefficient K2, and performs the RLMBFD relaxation measurement according to the second expansion coefficient K2.

If the user equipment determines that the user equipment does not satisfy the stationary criterion, the user equipment reports to the network device that the user equipment is in a non-stationary state, or does not report a state of the user equipment to the network device. If the network device receives the state reported by the user equipment or does not receive information about the state reported by the user equipment, the network device determines that the user equipment is in the non-stationary state, and then configures a determination parameter of a low mobility criterion and a determination parameter of a good cell signal quality criterion for the user equipment. The user equipment receives the determination parameter of the low mobility criterion and the determination parameter of the good cell signal quality criterion, and determines whether the user equipment satisfies the low mobility criterion and the good cell signal quality criterion. If the user equipment satisfies the low mobility criterion and the good cell signal quality criterion, the user equipment determines an expansion coefficient for RLM/BFD relaxation measurement to be a first expansion coefficient K1, and performs the RLMBFD relaxation measurement according to the first expansion coefficient K1.

An embodiment of the present invention further provides a measuring method, and the method includes the following steps. A user equipment reports to a network device that the user equipment supports an RRM relaxation measurement feature and an RLMBFD relaxation measurement feature through an RRC message. After receiving the relaxation measurement features supported and reported by the user equipment, the network device configures a determination parameter of a stationary criterion, a determination parameter of a low mobility criterion and a determination parameter of a good cell signal quality criterion for the user equipment, and sends the configured determination parameters described above to the user equipment. After receiving the determination parameters described above, the user equipment selects to determine the stationary criterion and the good cell signal quality criterion, or selects to determine the low mobility criterion and the good cell signal quality criterion according to an own state or agreement of a protocol. If the user equipment satisfies the stationary criterion and the good cell signal quality criterion, the user equipment determines an expansion coefficient for RLM/BFD relaxation measurement to be a second expansion coefficient K2, and performs the RLMBFD relaxation measurement according to the second expansion coefficient K2. If the user equipment satisfies the low mobility criterion and the good cell signal quality criterion, the user equipment determines an expansion coefficient for RLM/BFD relaxation measurement to be a first expansion coefficient K1, and performs the RLMBFD relaxation measurement according to the first expansion coefficient K1.

In addition, after receiving the relaxation measurement features supported and reported by the user equipment, the network device can also configure a determination parameter of a stationary criterion and a determination parameter of a good cell signal quality criterion only for the user equipment, and send the configured determination parameters described above to the user equipment. After receiving the determination parameters described above, the user equipment determines whether the user equipment satisfies the stationary criterion and the good cell signal quality criterion. If the user equipment satisfies the stationary criterion and the good cell signal quality criterion, the user equipment determines an expansion coefficient for RLM/BFD relaxation measurement to be a second expansion coefficient K2, and performs the RLMBFD relaxation measurement according to the second expansion coefficient K2.

The steps of the above methods are shown, for example, in Table 1 below.

Table 1

| Stationary criterion | Low mobility criterion-R17 | Good cell signal quality criterion | Operation of user equipment regarding RLM/BFD measurement relaxation |
|---|---|---|---|
| Configured | Configured | Configured | Mode 1: the stationary criterion and the good cell signal quality criterion are determined, and if both the criteria are satisfied, the expansion coefficient is determined to be K2; and<br>mode 2: the low mobility criterion and the good cell signal quality criterion are determined, and if both the criteria are satisfied, the expansion coefficient is determined to be K1;<br>where K2 > K1. |
| Configured | Not configured | Configured | If the stationary criterion and the good cell signal quality criterion are determined to be satisfied, the expansion coefficient is determined to be K2. |

An embodiment of the present invention provides a measuring apparatus disposed on a user equipment, and with reference to FIG. 16, the measuring apparatus includes: a transceiving module 1601 configured to send indication information to a network device, the indication information indicating a relaxation measurement feature supported by the user equipment, and the relaxation measurement feature including a first relaxation measurement feature and a second relaxation measurement feature; and receive configuration information from the network device, and determine, according to the configuration information, whether the user equipment satisfies a relaxation measurement criterion corresponding to the supported relaxation measurement feature; and a processing module 1602 configured to perform corresponding relaxation measurement according to the relaxation measurement criterion satisfied by the user equipment.

An embodiment of the present invention provides a measuring apparatus disposed on a network device, and with reference to FIG. 17, the measuring apparatus includes: a transceiving module 1701 configured to receive indication information from a user equipment, the indication information indicating a relaxation measurement feature supported by the user equipment, and the relaxation measurement feature including a first relaxation measurement feature and a second relaxation measurement feature; and sending configuration information to the user equipment, the configuration information being used for determining whether the user equipment satisfies a relaxation measurement criterion corresponding to the supported relaxation measurement feature.

An embodiment of the present invention provides a mobile terminal, including: a processor; and a memory used for storing processor-executable instructions; where the processor is configured to perform the executable instructions in the memory to implement steps of the above measuring method.

An embodiment of the present invention provides a network device, including: a processor; and a memory used for storing processor-executable instructions; where the processor is configured to perform the executable instructions in the memory to implement steps of the above measuring method.

An embodiment of the present invention provides a non-transitory computer-readable storage medium having stored therein executable instructions that, when executed by a processor, cause steps of the above measuring method to be implemented.

FIG. 18 is a block diagram of a measuring device 1800 according to an example embodiment. For example, the device 1800 can be a mobile phone, a computer, a digital broadcast terminal, a messaging device, a game console, a tablet device, a medical device, a fitness device, a personal digital assistant, and the like.

With reference to FIG. 18, the device 1800 can include one or more of the following components: a processing component 1802, a memory 1804, a power component 1806, a multimedia component 1808, an audio component 1810, an input/output (I/O) interface 1812, a sensor component 1814, and a communication component 1816.

The processing component 1802 generally controls overall operation of the device 1800, such as operation associated with display, telephone calls, data communication, camera operation, and recording operation. The processing component 1802 can include one or more processors 1820 for executing instructions to complete all or part of steps of the above method. In addition, the processing component 1802 can include one or more modules to facilitate interaction between the processing component 1802 and other components. For example, the processing component 1802 can include a multimedia module to facilitate interaction between the multimedia component 1808 and the processing component 1802.

The memory 1804 is configured to store various types of data to support operation at the device 1800. Instances of these data include instructions of any application program or method used for operating on the device 1800, contact data, phonebook data, messages, pictures, videos, and the like. The memory 1804 can be implemented by any type of volatile or nonvolatile memory devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 1806 provides electric power for various components of the device 1800. The power component 1806 can include a power management system, one or more power supplies, and other components associated with generating, managing, and distributing electric power for the device 1800.

The multimedia component 1808 includes a screen providing an output interface between the device 1800 and a user. In some embodiments, the screen can include a liquid crystal display (LCD) and a touch panel (TP). If the screen includes the touch panel, the screen can be implemented as a touch screen to receive an input signal from the user. The touch panel includes one or more touch sensors to sense touches, slides, and gestures on the touch panel. The touch sensors not only can sense boundaries of touch or slide actions, but also can detect duration and pressure related to the touch or slide operation. In some embodiments, the multimedia component 1808 includes a front camera and/or a rear camera. When the device 1800 is in an operation mode, such as a photographing mode or a video mode, the front camera and/or the rear camera can receive external multimedia data. Each of the front camera and the rear camera can be a fixed optical lens system or have a focal length and optical zooming capability.

The audio component 1810 is configured to output and/or input audio signals. For example, the audio component 1810 includes a microphone (MIC), and when the device 1800 is in an operating mode, such as a calling mode, a recording mode and a voice recognition mode, the microphone is configured to receive external audio signals. The received audio signals can be further stored in the memory 1804 or sent via the communication component 1816. In some embodiments, the audio component 1810 further includes a speaker used for outputting the audio signals.

The I/O interface 1812 provides an interface between the processing component 1802 and peripheral interface modules. The above peripheral interface modules can be keyboards, click wheels, buttons, and the like. These buttons can include, but are not limited to: a home button, a volume button, a start button and a locking button.

The sensor component 1814 includes one or more sensors used for providing state evaluation of various aspects for the device 1800. For example, the sensor component 1814 can detect a turning on/off state of the device 1800, and relative positioning of the components, for example, the components are a display and a keypad of the device 1800. The sensor component 1814 can also detect a change in the position of the device 1800 or one component of the device 1800, the presence or absence of contact between the user and the device 1800, the orientation or acceleration/deceleration of the device 1800, and a change in the temperature of the device 1800. The sensor component 1814 can include a proximity sensor which is configured to detect the presence of a nearby object without any physical contact. The sensor component 1814 can further include a light sensor, such as a CMOS or CCD image sensor for use in imaging applications. In some embodiments, the sensor component 1814 can further include an acceleration sensor, a gyroscope sensor, a magnetic sensor, a pressure sensor, or a temperature sensor.

The communication component 1816 is configured to facilitate wired or wireless communication between the device 1800 and other devices. The device 1800 can access a wireless network based on a communication standard, such as WiFi, 2G, or 3G, or a combination thereof. In one example embodiment, the communication component 1816 receives a broadcast signal or broadcast related information from an external broadcast management system via a broadcast channel. In one example embodiment, the communication component 1816 further includes a near field communication (NFC) module to promote short-range communication. For example, the NFC module can be implemented based on a radio frequency identification (RFID) technology, an infra-red data association (IrDA) technology, an ultra-wideband (UWB) technology, a Bluetooth (BT) technology, and other technologies.

In an example embodiment, the device 1800 can be implemented by one or more application specific integrated circuits (ASICs), a digital signal processor (DSP), a digital signal processing device (DSPD), a programmable logic device (PLD), a field programmable gate array (FPGA), a controller, a microcontroller, a microprocessor, or other electronic elements for performing the above method.

In an example embodiment, further provided is a non-transitory computer-readable storage medium including instructions, such as a memory 1804 including instructions, where the above instructions can be executed by a processor 1820 of the device 1800 to complete the above method. For example, the non-transitory computer-readable storage medium can be an ROM, a random access memory (RAM), a CD-ROM, a magnetic tape, a floppy disk, an optical data storage device, and the like.

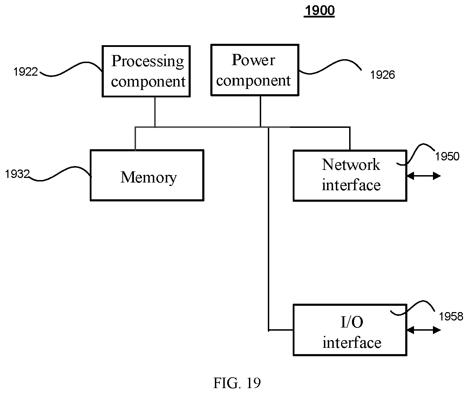

FIG. 19 is a block diagram of a measuring device 1900 according to an example embodiment. For example, the device 1900 can be provided as a base station. With reference to FIG. 19, the device 1900 includes a processing component 1922 which further includes one or more processors and memory resources represented by a memory 1932 for storing instructions, such as application programs, executable by the processing component 1922. The application programs stored in the memory 1932 can include one or more modules each corresponding to a set of instructions. In addition, the processing component 1922 is configured to perform the instructions to perform the above access method for unlicensed channels.

The device 1900 can further include a power component 1926 configured to perform power management of the device 1900, a wired or wireless network interface 1950 configured to connect the device 1900 to a network, and an input/output (I/O) interface 1959. The device 1900 can operate according to an operating system stored in the memory 1932, such as Windows ServerTM, Mac OS XTM, unixTM, LinuxTM, FreeBSDTM, or the like.

Other implementations of the embodiments of the present invention will be apparent to those skilled in the art from consideration of the specification and practice of the present invention disclosed herein. The present invention is intended to cover any variations, uses, or adaptations of the embodiments of the present invention, and these variations, uses, or adaptations follow the general principle of the embodiments of the present invention and include common general knowledge or customary technical means in the art not disclosed in the present invention. It is intended that the specification and embodiments are considered as exemplary only, with a true scope and spirit of the embodiments of the present invention being indicated by the following claims.

It should be understood that the embodiments of the present invention are not limited to the precise structures described above and shown in the accompanying drawings, and that various modifications and changes can be made without departing from the scope thereof. The scope of the embodiments of the present invention is only limited by the appended claims.

Industrial Applicability

The technical solutions provided by the embodiments of the present invention can include the following beneficial effects. When the user equipment supports both the RRM relaxation measurement feature and the RLMBFD relaxation measurement feature, the user equipment determines, according to the configuration information sent by the network device, the relaxation measurement criterion satisfied by the user equipment, so as to determine the relaxation degree of the RLMBFD measurement, and achieve more optimized RLMBFD relaxation measurement.

**Claims**

1.  A measuring method, performed by a user equipment, comprising:

    sending indication information to a network device, the indication information indicating a relaxation measurement feature supported by the user equipment, and the relaxation measurement feature comprising a first relaxation measurement feature and a second relaxation measurement feature;
    receiving configuration information from the network device, and determining, according to the configuration information, whether the user equipment satisfies a relaxation measurement criterion corresponding to the supported relaxation measurement feature; and
    performing corresponding relaxation measurement according to the relaxation measurement criterion satisfied by the user equipment.

2.  The method of claim 1, wherein receiving the configuration information from the network device, and determining, according to the configuration information, whether the user equipment satisfies the relaxation measurement criterion corresponding to the supported relaxation measurement feature, comprises:

    receiving first configuration information from the network device, the first configuration information comprising a first parameter set; and
    determining, according to the first parameter set, whether the user equipment satisfies a first relaxation measurement criterion corresponding to the first relaxation measurement feature.

3.  The method of claim 2, wherein receiving the configuration information from the network device, and determining, according to the configuration information, whether the user equipment satisfies the relaxation measurement criterion corresponding to the supported relaxation measurement feature, further comprises:

    receiving second configuration information from the network device in response to the network device determining that the user equipment satisfies the first relaxation measurement criterion, the second configuration information comprising a second parameter set; and
    determining, according to the second parameter set, whether the user equipment satisfies a second relaxation measurement criterion corresponding to the second relaxation measurement feature.

4.  The method of claim 2, wherein receiving the configuration information from the network device, and determining, according to the configuration information, whether the user equipment satisfies the relaxation measurement criterion corresponding to the supported relaxation measurement feature, further comprises:

    receiving third configuration information from the network device in response to the network device determining that the user equipment does not satisfy the first relaxation measurement criterion, the third configuration information comprising a second parameter set and a third parameter set; and
    determining, according to the second parameter set, whether the user equipment satisfies a second relaxation measurement criterion corresponding to the second relaxation measurement feature, and determining, according to the third parameter set, whether the user equipment satisfies a third relaxation measurement criterion corresponding to the second relaxation measurement feature.

5.  The method of claim 2, wherein receiving the configuration information from the network device, and determining, according to the configuration information, whether the user equipment satisfies the relaxation measurement criterion corresponding to the supported relaxation measurement feature, further comprises:

    receiving second configuration information from the network device in response to the network device determining that the user equipment does not satisfy the first relaxation measurement criterion, the second configuration information comprising a second parameter set; and
    determining, according to the second parameter set, whether the user equipment satisfies a second relaxation measurement criterion corresponding to the second relaxation measurement feature.

6. The method of claim 1, wherein receiving the configuration information from the network device, and determining, according to the configuration information, whether the user equipment satisfies the relaxation measurement criterion corresponding to the supported relaxation measurement feature, comprises:

   receiving fourth configuration information from the network device, the fourth configuration information comprising a first parameter set and a second parameter set; and
   determining, according to the first parameter set, whether the user equipment satisfies a first relaxation measurement criterion corresponding to the first relaxation measurement feature, and determining, according to the second parameter set, whether the user equipment satisfies a second relaxation measurement criterion corresponding to the second relaxation measurement feature.

7. The method of claim 1, wherein receiving the configuration information from the network device, and determining, according to the configuration information, whether the user equipment satisfies the relaxation measurement criterion corresponding to the supported relaxation measurement feature, comprises:

   receiving fifth configuration information from the network device, the fifth configuration information comprising a first parameter set, a second parameter set and a third parameter set; and
   determining, according to the first parameter set, whether the user equipment satisfies a first relaxation measurement criterion corresponding to the first relaxation measurement feature, and determining, according to the second parameter set, whether the user equipment satisfies a second relaxation measurement criterion corresponding to the second relaxation measurement feature;
   wherein the third parameter set is used for determining whether the user equipment satisfies a third relaxation measurement criterion corresponding to the second relaxation measurement feature.

8. The method of claim 1, wherein receiving the configuration information from the network device, and determining, according to the configuration information, whether the user equipment satisfies the relaxation measurement criterion corresponding to the supported relaxation measurement feature, comprises:

   receiving fifth configuration information from the network device, the fifth configuration information comprising a first parameter set, a second parameter set and a third parameter set; and
   determining, according to the second parameter set, whether the user equipment satisfies a second relaxation measurement criterion corresponding to the second relaxation measurement feature, and determining, according to the third parameter set, whether the user equipment satisfies a third relaxation measurement criterion corresponding to the second relaxation measurement feature;
   wherein the first parameter set is used for determining whether the user equipment satisfies a first relaxation measurement criterion corresponding to the first relaxation measurement feature.

9. The method of any one of claims 1-2, 4, and 8, wherein performing the corresponding relaxation measurement according to the relaxation measurement criterion satisfied by the user equipment, comprises:

   determining an expansion coefficient for second relaxation measurement to be a first expansion coefficient in response to the user equipment satisfying a second relaxation measurement criterion and a third relaxation measurement criterion; and
   performing the second relaxation measurement according to the first expansion coefficient;
   wherein the second relaxation measurement criterion and the third relaxation measurement criterion both correspond to the second relaxation measurement feature.

10. The method of any one of claims 1-3, and 6-7, wherein performing the corresponding relaxation measurement according to the relaxation measurement criterion satisfied by the user equipment, comprises:

    determining an expansion coefficient for second relaxation measurement to be a second expansion coefficient in response to the user equipment satisfying a first relaxation measurement criterion and a second relaxation measurement criterion; and
    performing the second relaxation measurement according to the second expansion coefficient;
    wherein the first relaxation measurement criterion corresponds to the first relaxation measurement feature, and the second relaxation measurement criterion corresponds to the second relaxation measurement feature.

11. The method of claim 1, wherein the first relaxation measurement feature is a radio resource management (RRM) relaxation measurement feature, and the second relaxation measurement feature is a radio link monitoring (RLM)/beam failure detection (BFD) relaxation measurement feature.

12. The method of claim 9, wherein the second relaxation measurement criterion is a good cell signal quality criterion, and the third relaxation measurement criterion is a low mobility criterion.

13. The method of claim 10, wherein the first relaxation measurement criterion is a stationary criterion, and the second relaxation measurement criterion is a good cell signal quality criterion.

14. A measuring method, performed by a network device, comprising:

receiving indication information from a user equipment, the indication information indicating a relaxation measurement feature supported by the user equipment, and the relaxation measurement feature comprising a first relaxation measurement feature and a second relaxation measurement feature; and
sending configuration information to the user equipment, the configuration information being used for the user equipment to determine whether a relaxation measurement criterion corresponding to the supported relaxation measurement feature is satisfied.

15. The method of claim 14, wherein sending the configuration information to the user equipment, comprises:
sending first configuration information to the user equipment, the first configuration information comprising a first parameter set, and the first parameter set being used for determining whether the user equipment satisfies a first relaxation measurement criterion corresponding to the first relaxation measurement feature.

16. The method of claim 15, wherein sending the configuration information to the user equipment, further comprises:
sending second configuration information to the user equipment in response to the user equipment satisfying the first relaxation measurement criterion, the second configuration information comprising a second parameter set, and the second parameter set being used for determining whether the user equipment satisfies a second relaxation measurement criterion corresponding to the second relaxation measurement feature.

17. The method of claim 15, wherein sending the configuration information to the user equipment, further comprises:
sending third configuration information to the user equipment in response to the user equipment not satisfying the first relaxation measurement criterion, the third configuration information comprising a second parameter set and a third parameter set, the second parameter set being used for determining whether the user equipment satisfies a second relaxation measurement criterion corresponding to the second relaxation measurement feature, and the third parameter set being used for determining whether the user equipment satisfies a third relaxation measurement criterion corresponding to the second relaxation measurement feature.

18. The method of claim 15, wherein sending the configuration information to the user equipment, further comprises:
sending second configuration information to the user equipment in response to the user equipment not satisfying the first relaxation measurement criterion, the second configuration information comprising a second parameter set, and the second parameter set being used for determining whether the user equipment satisfies a second relaxation measurement criterion corresponding to the second relaxation measurement feature.

19. The method of claim 14, wherein sending the configuration information to the user equipment, comprises:

sending fourth configuration information to the user equipment, the fourth configuration information comprising: a first parameter set and a second parameter set;
wherein the first parameter set is used for determining whether the user equipment satisfies a first relaxation measurement criterion corresponding to the first relaxation measurement feature, and the second parameter set is used for determining whether the user equipment satisfies a second relaxation measurement criterion corresponding to the second relaxation measurement feature.

20. The method of claim 14, wherein the sending configuration information to the user equipment, comprises:

sending fifth configuration information to the user equipment, the fifth configuration information comprising: a first parameter set, a second parameter set and a third parameter set;
wherein the first parameter set is used for determining whether the user equipment satisfies a first relaxation measurement criterion corresponding to the first relaxation measurement feature, the second parameter set is used for determining whether the user equipment satisfies a second relaxation measurement criterion corresponding to the second relaxation measurement feature, and the third parameter set is used for determining whether the user equipment satisfies a third relaxation measurement criterion corresponding to the second relaxation measurement feature.

21. The method of claim 14, wherein the first relaxation measurement feature is a radio resource management (RRM) relaxation measurement feature, and the second relaxation measurement feature is a radio link monitoring (RLM)/beam failure detection (BFD) relaxation measurement feature.

22. The method of claim 20, wherein the first relaxation measurement criterion is a stationary criterion, the second relaxation measurement criterion is a good cell signal quality criterion, and the third relaxation measurement criterion is a low mobility criterion.

23. A measuring apparatus, disposed on a user equipment, comprising:

   a transceiving module configured to send indication information to a network device, the indication information indicating a relaxation measurement feature supported by the user equipment, and the relaxation measurement feature comprising a first relaxation measurement feature and a second relaxation measurement feature; and receive configuration information from the network device, and determine, according to the configuration information, whether the user equipment satisfies a relaxation measurement criterion corresponding to the supported relaxation measurement feature; and
   a processing module configured to perform corresponding relaxation measurement according to the relaxation measurement criterion satisfied by the user equipment.

24. A measuring apparatus, disposed on a network device, comprising:
   a transceiving module configured to receive indication information from a user equipment, the indication information indicating a relaxation measurement feature supported by the user equipment, and the relaxation measurement feature comprising a first relaxation measurement feature and a second relaxation measurement feature; and send configuration information to the user equipment, the configuration information being used for determining whether the user equipment satisfies a relaxation measurement criterion corresponding to the supported relaxation measurement feature.

25. A mobile terminal, comprising:

   a processor; and
   a memory for storing processor-executable instructions;
   wherein the processor is configured to perform the executable instructions in the memory to implement steps of the measuring method of any one of claims 1 to 13.

26. A network device, comprising:

   a processor; and
   a memory for storing processor-executable instructions;
   wherein the processor is configured to perform the executable instructions in the memory to implement steps of the measuring method of any one of claims 14 to 22.

27. A non-transitory computer-readable storage medium having stored therein executable instructions that, when executed by a processor, cause steps of the measuring method of any one of claims 1 to 13 or steps of the measuring method of any one of claims 14 to 22 to be implemented.

sending indication information to a network device, the indication information indicating a relaxation measurement feature supported by the user equipment, and the relaxation measurement feature including a first relaxation measurement feature and a second relaxation measurement feature

101

receiving configuration information from the network device, and determine, according to the configuration information, whether the user equipment satisfies a relaxation measurement criterion corresponding to the supported relaxation measurement feature

102

performing corresponding relaxation measurement according to the relaxation measurement criterion satisfied by the user equipment

103

FIG. 1

sending indication information to a network device, the indication information indicating a relaxation measurement feature supported by the user equipment, and the relaxation measurement feature including a first relaxation measurement feature and a second relaxation measurement feature

201

receiving first configuration information from the network device, the first configuration information including a first parameter set

202

determining, according to the first parameter set, whether the user equipment satisfies a first relaxation measurement criterion corresponding to the first relaxation measurement feature

203

receiving second configuration information from the network device in response to the network device determining that the user equipment satisfies the first relaxation measurement criterion, the second configuration information including a second parameter set

204

determining, according to the second parameter set, whether the user equipment satisfies a second relaxation measurement criterion corresponding to the second relaxation measurement feature

205

performing corresponding relaxation measurement according to the relaxation measurement criterion satisfied by the user equipment

206

FIG. 2

sending indication information to a network device, the indication information indicating a relaxation measurement feature supported by the user equipment, and the relaxation measurement feature including a first relaxation measurement feature and a second relaxation measurement feature ⟶ 301

receiving first configuration information from the network device, the first configuration information including a first parameter set ⟶ 302

determining, according to the first parameter set, whether the user equipment satisfies a first relaxation measurement criterion corresponding to the first relaxation measurement feature ⟶ 303

receiving third configuration information from the network device in response to the network device determining that the user equipment does not satisfy the first relaxation measurement criterion, the third configuration information including a second parameter set and a third parameter set ⟶ 304

determining, according to the second parameter set and the third parameter set, whether the user equipment satisfies a second relaxation measurement criterion and a third relaxation measurement criterion ⟶ 305

performing corresponding relaxation measurement according to the relaxation measurement criterion satisfied by the user equipment ⟶ 306

FIG. 3

sending indication information to a network device, the indication information indicating a relaxation measurement feature supported by the user equipment, and the relaxation measurement feature including a first relaxation measurement feature and a second relaxation measurement feature
— 401

receiving first configuration information from the network device, the first configuration information including a first parameter set
— 402

determining, according to the first parameter set, whether the user equipment satisfies a first relaxation measurement criterion corresponding to the first relaxation measurement feature
— 403

receiving second configuration information from the network device in response to the network device determining that the user equipment does not satisfy the first relaxation measurement criterion, the second configuration information including a second parameter set
— 404

determining, according to the second parameter set, whether the user equipment satisfies a second relaxation measurement criterion corresponding to the second relaxation measurement feature
— 405

performing corresponding relaxation measurement according to the relaxation measurement criterion satisfied by the user equipment
— 406

FIG. 4

sending indication information to a network device, the indication information indicating a relaxation measurement feature supported by the user equipment, and the relaxation measurement feature including a first relaxation measurement feature and a second relaxation measurement feature

501

receiving fourth configuration information from the network device, the fourth configuration information including a first parameter set and a second parameter set

502

determining, according to the first parameter set, whether the user equipment satisfies a first relaxation measurement criterion, and determining, according to the second parameter set, whether the user equipment satisfies a second relaxation measurement criterion

503

performing corresponding relaxation measurement according to the relaxation measurement criterion satisfied by the user equipment

504

FIG. 5

sending indication information to a network device, the indication information indicating a relaxation measurement feature supported by the user equipment, and the relaxation measurement feature including a first relaxation measurement feature and a second relaxation measurement feature

601

receiving fifth configuration information from the network device, the fifth configuration information including a first parameter set, a second parameter set and a third parameter set

602

determining, according to the first parameter set, whether the user equipment satisfies a first relaxation measurement criterion, and determining, according to the second parameter set, whether the user equipment satisfies a second relaxation measurement criterion

603

performing corresponding relaxation measurement according to the relaxation measurement criterion satisfied by the user equipment

604

FIG. 6

sending indication information to a network device, the indication information indicating a relaxation measurement feature supported by the user equipment, and the relaxation measurement feature including a first relaxation measurement feature and a second relaxation measurement feature ⟶ 701

receiving fifth configuration information from the network device, the fifth configuration information including a first parameter set, a second parameter set and a third parameter set ⟶ 702

determining, according to the second parameter set, whether the user equipment satisfies a second relaxation measurement criterion, and determining, according to the third parameter set, whether the user equipment satisfies a third relaxation measurement criterion ⟶ 703

performing corresponding relaxation measurement according to the relaxation measurement criterion satisfied by the user equipment ⟶ 704

FIG. 7

sending indication information to a network device, the indication information indicating a relaxation measurement feature supported by the user equipment, and the relaxation measurement feature including a first relaxation measurement feature and a second relaxation measurement feature ⟶ 801

receiving configuration information from the network device, and determining, according to the configuration information, whether the user equipment satisfies a relaxation measurement criterion corresponding to the supported relaxation measurement feature ⟶ 802

determining an expansion coefficient for second relaxation measurement to be a first expansion coefficient in response to the user equipment satisfying a second relaxation measurement criterion and a third relaxation measurement criterion ⟶ 803

performing the second relaxation measurement according to the first expansion coefficient ⟶ 804

FIG. 8

sending indication information to a network device, the indication information indicating a relaxation measurement feature supported by the user equipment, and the relaxation measurement feature including a first relaxation measurement feature and a second relaxation measurement feature — 901

receiving configuration information from the network device, and determining, according to the configuration information, whether the user equipment satisfies a relaxation measurement criterion corresponding to the supported relaxation measurement feature — 902

determining an expansion coefficient for second relaxation measurement to be a second expansion coefficient in response to the user equipment satisfying the first relaxation measurement criterion and the second relaxation measurement criterion — 903

performing the second relaxation measurement according to the second expansion coefficient — 904

FIG. 9

receiving indication information from a user equipment, the indication information indicating a relaxation measurement feature supported by the user equipment, and the relaxation measurement feature including a first relaxation measurement feature and a second relaxation measurement feature — 1001

sending configuration information to the user equipment, the configuration information being used for the user equipment to determine whether a relaxation measurement criterion corresponding to the supported relaxation measurement feature is satisfied — 1002

FIG. 10

receiving indication information from a user equipment, the indication information indicating a relaxation measurement feature supported by the user equipment, and the relaxation measurement feature including a first relaxation measurement feature and a second relaxation measurement feature — 1101

sending first configuration information to the user equipment, the first configuration information including a first parameter set — 1102

sending second configuration information to the user equipment in response to the user equipment satisfying the first relaxation measurement criterion, the second configuration information including a second parameter set — 1103

FIG. 11

receiving indication information from a user equipment, the indication information indicating a relaxation measurement feature supported by the user equipment, and the relaxation measurement feature including a first relaxation measurement feature and a second relaxation measurement feature | 1201

sending first configuration information to the user equipment, the first configuration information including a first parameter set | 1202

sending third configuration information to the user equipment in response to the user equipment not satisfying the first relaxation measurement criterion, the third configuration information including a second parameter set and a third parameter set | 1203

FIG. 12

receiving indication information from a user equipment, the indication information indicating a relaxation measurement feature supported by the user equipment, and the relaxation measurement feature including a first relaxation measurement feature and a second relaxation measurement feature | 1301

sending first configuration information to the user equipment, the first configuration information including a first parameter set | 1302

sending second configuration information to the user equipment in response to the user equipment not satisfying the first relaxation measurement criterion, the second configuration information including a second parameter set | 1303

FIG. 13

receiving indication information from a user equipment, the indication information indicating a relaxation measurement feature supported by the user equipment, and the relaxation measurement feature including a first relaxation measurement feature and a second relaxation measurement feature | 1401

sending fourth configuration information to the user equipment, the fourth configuration information including a first parameter set and a second parameter set | 1402

FIG. 14

receiving indication information from a user equipment, the indication information indicating a relaxation measurement feature supported by the user equipment, and the relaxation measurement feature including a first relaxation measurement feature and a second relaxation measurement feature

1501

sending fifth configuration information to the user equipment, the fifth configuration information including a first parameter set, a second parameter set and a third parameter set

1502

FIG. 15

| Transceiving module 1601 | Processing module 1602 |

FIG. 16

Transceiving module 1701

FIG. 17

1804   1802   1800

Memory

Processing component

Communication component

1816

1806

Power component

Processor

1820

1808

Multimedia component

Sensor component

1814

1810

Audio component

I/O interface

1812

FIG. 18

<u>1900</u>

FIG. 19

## INTERNATIONAL SEARCH REPORT

| International application No. |
|---|
| **PCT/CN2022/084591** |

**A.    CLASSIFICATION OF SUBJECT MATTER**

H04W 74/00(2009.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

WPI, CNTXT, EPODOC, CNKI, IEEE: 终端设备, 基站, 放松测量, 准则, 判断, 满足, 静止, RRM, RLM, BFD, UE, BS, relaxation measurement, rule, judge, meet, static

**C.    DOCUMENTS CONSIDERED TO BE RELEVANT**

| Category* | Citation of document, with indication, where appropriate, of the relevant passages | Relevant to claim No. |
|---|---|---|
| Y | CN 114158131 A (SPREADTRUM COMMUNICATIONS SHANGHAI INC.) 08 March 2022 (2022-03-08)<br>description, paragraphs [0027]-[0049] | 1, 2, 6-8, 11, 14, 15, 19-27 |
| Y | CN 114258065 A (MEDIATEK INC.) 29 March 2022 (2022-03-29)<br>claims 1-22 | 1, 2, 6-8, 11, 14, 15, 19-27 |
| A | CN 113498100 A (HUAWEI TECHNOLOGIES CO., LTD.) 12 October 2021 (2021-10-12)<br>entire document | 1-27 |
| A | US 2021352507 A1 (QUALCOMM INC.) 11 November 2021 (2021-11-11)<br>entire document | 1-27 |
| A | CN 113766572 A (GUANGDONG OPPO MOBILE COMMUNICATIONS CO., LTD.) 07 December 2021 (2021-12-07)<br>entire document | 1-27 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 December 2022** | **27 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2022/084591**

| Patent document cited in search report | | | Publication date (day/month/year) | Patent family member(s) | | | Publication date (day/month/year) |
|---|---|---|---|---|---|---|---|
| CN | 114158131 | A | 08 March 2022 | None | | | |
| CN | 114258065 | A | 29 March 2022 | TW | 202213958 | A | 01 April 2022 |
| | | | | US | 2022104044 | A1 | 31 March 2022 |
| CN | 113498100 | A | 12 October 2021 | None | | | |
| US | 2021352507 | A1 | 11 November 2021 | WO | 2021226028 | A1 | 11 November 2021 |
| CN | 113766572 | A | 07 December 2021 | CN | 113383582 | A | 10 September 2021 |
| | | | | EP | 3949547 | A1 | 09 February 2022 |
| | | | | JP | 2022527134 | A | 30 May 2022 |
| | | | | US | 2022007225 | A1 | 06 January 2022 |
| | | | | WO | 2021098803 | A1 | 27 May 2021 |
| | | | | KR | 20220100792 | A | 18 July 2022 |

Form PCT/ISA/210 (patent family annex) (January 2015)